# EUROPEAN PATENT APPLICATION

(11) **EP 4 823 183 A1**
(43) Date of publication of application: **14.10.2026**
(21) Application number: 24899947.6
(22) Date of filing: 06.12.2024
(51) Int. Cl.: H04W 48/08

(54) **SIGNAL PROCESSING METHOD AND APPARATUS**

(30) Priority: 07.12.2023 CN 202311674747
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); YANG, Meiying, Beijing 100085 (CN); SU, Yuwan, Beijing 100085 (CN)
(74) Representative: dompatent
(86) International application number: PCT/CN2024/137330
(87) International publication number: WO 2025/119314

(57) **Abstract**

Provided in the present disclosure are a signal processing method and apparatus. The method in the embodiments of the present disclosure comprises: transmitting a first signal for at least one of the following: discovering a terminal; waking up a target cell; or triggering the target cell to transmit and/or receive a first object, which comprises at least one of a first target reference signal or a first target channel; and triggering the target cell to switch to a first state, wherein the first signal comprises at least one of the following: an on-off keying (OOK) signal, an amplitude shift keying (ASK) signal, a frequency shift keying (FSK) signal, or a phase shift keying (PSK) signal.

## Description

### CROSS-REFERENCE TO RELATED APPLICATIONS

The present application is filed based on and claims the priority of Chinese Application No. 202311674747.0 filed on December 7, 2023, and entitled "signal processing method and device", the disclosure of which are incorporated in their entireties by reference herein.

### TECHNICAL FIELD

The present disclosure relates to the field of communication technology, and in particular to a signal processing method and device.

### BACKGROUND

Network energy saving is very important for environmental sustainability, reducing environmental impact (greenhouse gas emissions) and saving operating costs. In related art, a base station can adopt some energy-saving measures, such as sleeping or stopping signal transmission and reception. However, in case that a user equipment is unaware of when the base station enters an energy-saving state, the user equipment assumes that the base station is always in service. When the base station fails to wake up or activate, services of the user equipment will be affected.

### SUMMARY

An objective of the present disclosure is to provide an information processing method and device, which can solve the problem of how a terminal can wake up or trigger a base station to provide services.

To achieve the above objective, the present disclosure provides a signal processing method, performed by a terminal, which includes:
transmitting a first signal used for at least one of the following:
discovering a terminal;
waking up a target cell;
triggering a target cell to transmit and/or receive a first object, wherein the first object includes at least one of a first target reference signal or a first target channel; or,
triggering a target cell to switch to a first state;
wherein the first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

In some embodiments, the method further includes:
obtaining a first response signal for the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the method further includes:
transmitting a second signal to a specific cell; wherein the second signal is used to indicate at least one of the following: waking up the specific cell, triggering the specific cell to transmit or receive a second object, or triggering the specific cell to switch to a second state; wherein the second object includes at least one of a second target reference signal or a second target channel.

In some embodiments, the second signal carries at least one of the following:
information related to waking up the specific cell;
information related to triggering the specific cell,
information related to triggering the specific cell to transmit and/or receive the second object; or
information related to triggering the specific cell to switch to the second state.

In some embodiments, the method further includes:
obtaining a second response signal; wherein the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the method further includes:
at a first moment, receiving and/or transmitting, in a first specific cell, a first specific reference signal and/or a first specific channel in an RRC idle state or an RRC inactive state;
wherein the first moment includes at least one of the following:
   a moment that is offset by a first duration from a transmission time of the first signal;
   a moment that is offset by a second duration from a transmission time of a second signal;
   a moment that is offset by a third duration from a reception time of a first response signal to the first signal; or,
   a moment that is offset by a fourth duration from a reception time of a second response signal; wherein the second response signal is a response signal to the second signal, or a response signal to both the first signal and the second signal;
   where the first specific cell includes at least one of the following:
      at least one of a target cell indicated by the first signal or a specific cell indicated by the second signal;
      a cell that transmits the first response signal;
      a cell that transmits the second response signal;
      a cell indicated by the first response signal; or,
      a cell indicated by the second response signal;
      the first specific reference signal includes at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
      the first specific channel includes at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
      the second signal is used to indicate at least one of the following: waking up a specific cell, triggering a specific cell to transmit or receive a second object, or triggering a specific cell to switch to a second state, wherein the second object includes at least one of a second target reference signal or a second target channel.

In some embodiments, the method further includes:
at a second moment, transmitting and/or receiving a second specific reference signal and/or a second specific channel of a second specific cell;
wherein the second moment includes at least one of the following:
   a moment that is offset by a first duration from a transmission time of the first signal;
   a moment that is offset by a second duration from a transmission time of a second signal;
   a moment that is offset by a third duration from a reception time of a first response signal to the first signal; or,
   a moment that is offset by a fourth duration from a reception time of a second response signal; wherein the second response signal is a response signal to the second signal, or a response signal to both the first signal and the second signal;
   wherein the second specific cell includes at least one of the following:
      at least one of a target cell indicated by the first signal or a specific cell indicated by the second signal;
      a cell that transmits the first response signal;
      a cell that transmits the second response signal;
      a cell indicated by the first response signal; or,
      a cell indicated by the second response signal;
      the second specific reference signal includes at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal associated with the first signal, or a reference signal associated with the second signal;
      the second specific channel includes at least one of a first target channel indicated by the first signal, a second target channel indicated by the second signal, a first channel indicated by the first response signal, a second channel indicated by the second response signal, a channel agreed upon by a protocol, a channel configured by a high layer, a channel associated with the first signal, or a channel associated with the second signal.

In some embodiments, the method further includes:
at a third moment, transmitting and/or receiving a third specific reference signal and/or a third specific channel in a specific cell state;
wherein the third moment includes at least one of the following:
   a moment that is offset by a first duration from a transmission time of the first signal;
   a moment that is offset by a second duration from a transmission time of a second signal;
   a moment that is offset by a third duration from a reception time of a first response signal to the first signal; or,
   a moment that is offset by a fourth duration from a reception time of a second response signal; wherein the second response signal is a response signal to the second signal, or a response signal to both the first signal and the second signal;
   the specific cell state includes at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal;
   the third specific reference signal includes at least one of a reference signal configured by high layer signaling, a reference signal configured by core network signaling, a reference signal pre-stored by the terminal, or a reference signal notified by neighboring cell signaling;
   the third specific channel includes at least one of a channel configured by high-layer signaling, a channel configured by core network signaling, a channel pre-stored by the terminal, or a channel notified by neighboring cell signaling.

One embodiment of the present disclosure further provides an information processing method, performed by a network side device, which includes:
receiving a first signal for at least one of the following:
discovering a terminal;
waking up a target cell;
triggering a target cell to transmit and/or receive a first object; wherein the first object includes at least one of a first target reference signal or a first target channel; or
triggering a target cell to switch to a first state;
wherein the first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

In some embodiments, after receiving the first signal, the method further includes:
transmitting a first response signal for the first signal.

In some embodiments, the transmitting a first response signal for the first signal, includes:
transmitting the first response signal for the first signal when signal information of the first signal meets a first condition;
wherein the signal information includes at least one of amplitude, frequency, carrier, bandwidth, phase, power or energy of the first signal.

In some embodiments, the method further includes
in case that signal information of the first signal meets a first condition, performing at least one of the following:
discovering a terminal; waking up a target cell; triggering the target cell to transmit or receive a first object; or triggering the target cell to switch to a first state;
wherein the signal information includes at least one of amplitude, frequency, carrier, bandwidth, phase, power or energy of the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the method further includes:
obtaining a second signal; wherein the second signal is used to indicate at least one of the following: waking up a specific cell, triggering a specific cell to transmit or receive a second object; or triggering a specific cell to switch to a second state; wherein the second object includes at least one of a second target reference signal or a second target channel.

In some embodiments, the second signal carries at least one of the following:
information related to waking up the specific cell;
information related to triggering the specific cell,
information related to triggering the specific cell to transmit and/or receive the second object; or
information related to triggering the specific cell to switch to the second state.

In some embodiments, the method further includes
transmitting a second response signal; wherein the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the method further includes:
at a fourth moment, transmitting and/or receiving a first specific reference signal and/or a first specific channel in an RRC idle state or an RRC inactive state;
wherein the fourth moment includes at least one of the following:
   a moment that is offset by a fifth duration from a reception time of the first signal;
   a moment that is offset by a sixth duration from a reception time of a second signal;
   a moment that is offset by a seventh duration from a transmission time of a first response signal to the first signal; or,
   a moment that is offset by an eighth duration from a transmission time of a second response signal; wherein the second response signal is a response signal to the second signal, or a response signal to both the first signal and the second signal;
   wherein the first specific cell includes at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
   the first specific channel includes at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
   the second signal is used to indicate at least one of the following: waking up a specific cell, triggering a specific cell to transmit or receive a second object, or triggering a specific cell to switch to a second state; wherein the second object includes at least one of a second target reference signal or a second target channel.

In some embodiments, the method further includes:
at a fifth moment, receiving and/or transmitting a second specific reference signal and/or a second specific channel;
wherein the fifth moment includes at least one of the following:
   a moment that is offset by a fifth duration from a reception time of the first signal;
   a moment that is offset by a sixth duration from a reception time of a second signal;
   a moment that is offset by a seventh duration from a transmission time of a first response signal to the first signal; or,
   a moment that is offset by an eighth duration from a transmission time of a second response signal; wherein the second response signal is a response signal to the second signal, or a response signal to both the first signal and the second signal;
   wherein the second specific reference signal includes at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal;
   the second specific channel includes at least one of a first target channel indicated by the first signal, a second target channel indicated by the second signal, a channel agreed upon by a protocol, a channel configured by a higher layer, a channel associated with the first signal, or a channel associated with the second signal.

In some embodiments, the method further includes:
at the sixth moment, switching to a specific cell state;
wherein the sixth moment includes at least one of the following:
   a moment that is offset by a fifth duration from a reception time of the first signal;
   a moment that is offset by a sixth duration from a reception time of a second signal;
   a moment that is offset by a seventh duration from a transmission time of a first response signal to the first signal; or,
   a moment that is offset by an eighth duration from a transmission time of a second response signal; wherein the second response signal is a response signal to the second signal, or a response signal to both the first signal and the second signal;
   the specific cell state includes at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal.

One embodiment of the present disclosure further provides a signal processing device, including: a memory, a transceiver, and a processor;
wherein the memory is used to store a computer program; the transceiver is used to transmit and receive data under the control of the processor; the processor is used to read the computer program in the memory and perform the following operations:
transmitting a first signal used for at least one of the following:
discovering a terminal;
waking up a target cell;
triggering a target cell to transmit and/or receive a first object, wherein the first object includes at least one of a first target reference signal or a first target channel; or,
triggering a target cell to switch to a first state;
wherein the first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

In some embodiments, the processor is used to perform the following operations:
obtaining a first response signal for the first signal.

One embodiment of the present disclosure further provides a signal processing device, including: a memory, a transceiver, and a processor;
wherein the memory is used to store a computer program; the transceiver is used to transmit and receive data under the control of the processor; the processor is used to read the computer program in the memory and perform the following operations:
receiving a first signal for at least one of the following:
discovering a terminal;
waking up a target cell;
triggering a target cell to transmit and/or receive a first object; wherein the first object includes at least one of a first target reference signal or a first target channel; or
triggering a target cell to switch to a first state;
wherein the first signal includes at least one of the following: an on-off keying (OOK) signal; an amplitude shift keying (ASK) signal; a frequency shift keying (FSK) signal; or a phase shift keying (PSK) signal.

One embodiment of the present disclosure further provides a processor-readable storage medium, which includes a computer program stored thereon; wherein the computer program, when executed by a processor, causes the processor to perform steps of the above signal processing method.

The above technical solution of the present disclosure has at least the following beneficial effects.

In one embodiment of the present disclosure, the terminal transmits the first signal, where the first signal includes at least one of the following: an OOK signal; an ASK signal; an FSK signal; or a PSK signal. The OOK/ASK/FSK/PSK signal can be used to wake up the target cell, trigger the target cell to transmit and/or receive the first object, and trigger the target cell to switch to the first state. Since the signal transmitted between the terminal and the network side device in the related technical solution is an OFDM signal, and the network side device in the sleep or energy-saving state cannot process the OFDM signal (such as fast Fourier transform FFT), while the above OOK/ASK/FSK/PSK signal is a low-power signal different from the OFDM signal, and the processing method of the low-power signal is different from the processing method of the OFDM signal in the related technology, the cell in the sleep state or energy-saving state can process the low-power signal. In this way, the low-power signal enables the terminal to communicate with a dormant cell or a cell in an energy-saving state without synchronization, thereby waking up the dormant cell or triggering the dormant cell to wake up for providing services.

### BRIEF DESCRIPTION OF THE DRAWINGS

FIG. 1 is a structural diagram of a network system to which embodiments of the present disclosure can be applied;
FIG. 2 is a first schematic flow chart of an information processing method according to an embodiment of the present disclosure;
FIG. 3 is a first schematic diagram of a signal transmitter according to an embodiment of the present disclosure;
FIG. 4 is a second schematic diagram of a signal transmitter according to an embodiment of the present disclosure;
FIG. 5 is a first schematic diagram of a first signal according to an embodiment of the present disclosure;
FIG. 6 is a second schematic diagram of a first signal according to an embodiment of the present disclosure;
FIG. 7 is a third schematic diagram of a first signal according to an embodiment of the present disclosure;
FIG. 8 is a fourth schematic diagram of a first signal according to an embodiment of the present disclosure;
FIG. 9 is a fifth schematic diagram of a first signal according to an embodiment of the present disclosure;
FIG. 10 is a sixth schematic diagram of a first signal according to an embodiment of the present disclosure;
FIG. 11 is a seventh schematic diagram of a first signal according to an embodiment of the present disclosure;
FIG. 12 is an eighth schematic diagram of a first signal according to an embodiment of the present disclosure;
FIG. 13 is a second schematic flow chart of an information processing method according to an embodiment of the present disclosure;
FIG. 14 is a first schematic interaction diagram of an information processing method according to an embodiment of the present disclosure;
FIG. 15 is a second schematic interaction diagram of an information processing method according to an embodiment of the present disclosure;
FIG. 16 is a third schematic interaction diagram of an information processing method according to an embodiment of the present disclosure;
FIG. 17 is a fourth schematic interaction diagram of an information processing method according to an embodiment of the present disclosure;
FIG.18 is a first structural block diagram of an information processing device according to an embodiment of the present disclosure;
FIG.19 is a second structural block diagram of an information processing device according to an embodiment of the present disclosure;
FIG. 20 is a first schematic diagram showing modules of an information processing device according to an embodiment of the present disclosure; and
FIG. 21 is a second schematic diagram showing modules of an information processing device according to an embodiment of the present disclosure.

### DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship. The term "a plurality of" in the embodiments of this disclosure means two or more, and other quantifiers are similar.

In the embodiments of the present disclosure, terms such as "exemplary" or "for example" are used to illustrate an example, provide an instance, or give an explanation. Any embodiment or design solution described as "exemplary" or "for example" shall not be interpreted as being superior to or more advantageous than other embodiments or design solutions. Rather, the use of terms such as "exemplary" or "for example" is intended to present the related concepts in a concrete manner.

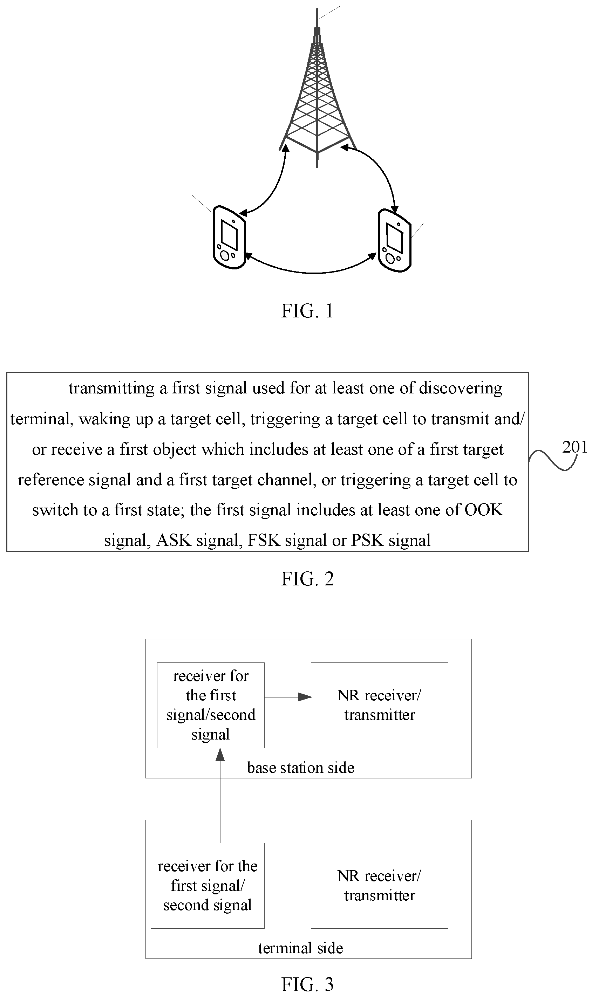

FIG. 1 shows a block diagram of a wireless communication system applicable to an embodiment of the present disclosure. The wireless communication system includes a terminal device 11 and a network side device (or network device) 12. The terminal device 11 may also be referred to as a terminal or a user equipment (UE). It is to be noted that the specific type of the terminal 11 is not limited in the embodiment of the present disclosure. The network side device 12 may be a base station or a core network. It is to be noted that in the embodiment of the present disclosure, the base station in the NR system is only taken as an example, but the specific type of the base station is not limited.

As shown in FIG. 2, one embodiment of the present disclosure provides a signal processing method, which is executed by a terminal. The method includes:
Step 201: transmitting a first signal used for at least one of the following:
discovering terminal;
waking up a target cell; or
triggering a target cell to transmit and/or receive a first object, where the first object includes at least one of a first target reference signal or a first target channel;
triggering a target cell to switch to a first state, where for example, the first state includes a light sleep state.

The first signal includes at least one of the following: an on-off keying (OOK) signal; an amplitude shift keying (ASK) signal; a frequency shift keying (FSK) signal; or a phase shift keying (PSK) signal.

In this step, the terminal may transmit the first signal to the target cell or a base station where the target cell is located by broadcasting.

In some embodiments, the first signal may be transmitted through a first signal dedicated transmitter or through an NR transmitter.

In some embodiments, the target cell includes at least one of a dormant cell, a closed cell, a sleeping cell, or an energy-saving cell. The target cell may be a primary serving cell or a secondary cell, and the target cell has a cell identity (ID).

In some embodiments, the above terminal includes a terminal to be served, which may be a dedicated terminal that only includes transmitting/receiving OOK/ASK/FSK/PSK signals based on orthogonal frequency division multiplexing (OFDM), or a terminal that includes both transmitting/receiving OFDM-based OOK/ASK/FSK/PSK signals and transmitting/receiving NR signals. Here, an OOK/ASK/FSK/PSK uplink signal transmitted by the terminal may be based on a multi-carrier waveform, such as cyclic prefix OFDM (CP-OFDM), or may be based on a single-carrier waveform, such as discrete Fourier Transform-Spread OFDM (DFT-S-OFDM).

In some embodiments, the above first target reference signal includes at least one of the following: primary synchronization signal (PSS), secondary synchronization signal (SSS), synchronization signal/physical broadcast channel signal block (Synchronization Signal Block, SSB), CSI reference signal for tracking (TRS), positioning reference signal (PRS), phase-tracking reference signal (PT-RS), random access preamble, sounding reference signal (SRS), demodulation reference signal (DMRS), or CSI reference signal (CSI-RS).

In some embodiments, the first target channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

In some embodiments, the first signal includes signal information and indication information. The signal information includes at least one of amplitude, frequency, carrier, bandwidth, phase, or power and energy of the first signal. The indication information is used to indicate that the first signal is used for at least one of the following: discovering terminal; waking up a target cell; triggering a target cell to transmit and/or receive a first object; or triggering a target cell to switch to a first state.

The above OOK/ASK/FSK/PSK signal is a low-power signal. The network side device corresponding to the above target cell can detect and process the OOK/ASK/FSK/PSK signal by using envelope detection. In this way, the low-power signal enables the terminal to communicate with a dormant cell or a cell in an energy-saving state without synchronization, thereby waking up the dormant cell or triggering the dormant cell to wake up for providing services.

In one embodiment of the present disclosure, the terminal transmits the first signal, where the first signal includes at least one of the following: an OOK signal; an ASK signal; an FSK signal; or a PSK signal. The OOK/ASK/FSK/PSK signal can be used to wake up the target cell, trigger the target cell to transmit and/or receive the first object, and trigger the target cell to switch to the first state. Since the signal transmitted between the terminal and the network side device in the related technical solution is an OFDM signal, and the network side device in the sleep or energy-saving state cannot process the OFDM signal (such as fast Fourier transform FFT), while the above OOK/ASK/FSK/PSK signal is a low-power signal different from the OFDM signal, and the processing method of the low-power signal is different from the processing method of the OFDM signal in the related technology, the cell in the sleep state or energy-saving state can process the low-power signal. In this way, the low-power signal enables the terminal to communicate with a dormant cell or a cell in an energy-saving state without synchronization, thereby waking up the dormant cell or triggering the dormant cell to wake up for providing services.

In some embodiments, the first signal is an OFDM based signal, that is, the first signal is an OFDM-based OOK/ASK/FSK/PSK signal.

In case that the first signal is an OFDM-based OOK/ASK/FSK/PSK signal, the architecture of the new radio (NR) transceiver in the related art can be used, to further avoid adding new transceivers, thereby simplifying complexity of the transceiver. The detection of OOK/ASK/FSK/PSK modulated signals (i.e., OFDM-based OOK/ASK/FSK/PSK signals) can be performed via envelope, filtering, or phase detection without requiring an Inverse Fast Fourier Transform (IFFT) operation. This significantly reduces power consumption of a receiving end, thereby achieving an energy-saving effect.

In some embodiments, the first signal carries at least one of the following:
information related to discovering terminal, such as amplitude/phase/power/energy or other related information of a signal used for signal detection;
information related to waking up the target cell, for example, which includes indication information for waking up the target cell or a cell group where the target cell is located, and information related to an identity of the target cell or the cell group where the target cell is located, where the indication information for waking up the target cell is used to indicate whether to wake up the target cell;
information related to triggering a target cell, for example, which includes indication information of the target cell or a cell group where the target cell is located, and information related to an identity of the target cell or the cell group where the target cell is located; where the indication signal for triggering the target cell is used to indicate a target cell to be triggered;
information related to triggering a target cell to transmit and/or receive the first object, for example, which includes indication information of transmitting and/or receiving a first target reference signal, where the indication information is used to indicate at least one of the first target reference signal and the first target channel transmitted or received by the target cell; or
information related to triggering the target cell to switch to the first state, for example, which includes cell state indication information.

As an implementation manner, the first signal carries at least one of the following:
wake-up cell indication information used to indicate whether to wake up the target cell;
cell identity related information used to indicate cell information related to transmitting/receiving of wake-up or trigger signals/channels;
first object transmitting/receiving indication information used to indicate a first object transmitted/received by the target cell;
function trigger indication information used to instruct the target cell to turn on or off a specific function, such as measurement, synchronization, positioning, energy saving, access, and specific service transmission;
terminal specific identity used to indicate a specific type of the terminal or terminal identity, such as terminal type identity, terminal version identity, terminal identity for supporting specific services, and related indication on whether the target cell can be woken up;
terminal demand information related identity used to indicate a current service requirement of the terminal, such as access, measurement, synchronization, positioning, energy saving, and specific service transmission requirements; or, to indicate a current service requirement of the terminal, such as enhanced mobile broadband (eMBB) service, extended reality (XR) service, Ultra-Reliable and Low Latency Communications (URLLC) service, massive machine type of communication (mMTC) service, ambient Internet of Things (AIoT) service, etc.; or
cell state indication information used to instruct the target cell to switch between at least two states, or to switch to the first state.

In one embodiment of the present disclosure, the network side device may wake up the target cell after receiving the above first signal for a certain period of time, and performs at least one of triggering the target cell to transmitting and/or receiving the first object, or triggering the target cell to switch to the first state.

When the terminal does not receive any synchronization signal sent by the target cell, such as primary synchronization signal (PSS), secondary synchronization signal (SSS), synchronization signal/physical broadcast channel signal block (SSB), tracking reference signal (TRS), etc., or receives a synchronization signal sent by the target cell at a longer time interval, such as PSS, SSS, SSB, TRS, etc., the terminal cannot achieve synchronization or precise synchronization with the base station, and then the terminal cannot transmit any signal to the base station based on the NR signal in the related art. In the embodiment of the present disclosure, the terminal transmits a first signal which is a modulated signal based on OOK/ASK/FSK/PSK, and the base station can detect the first signal based on the amplitude/power/energy/phase and other related information of the first signal without requiring precise synchronization with the terminal, thereby achieving the effect of discovering the terminal in the absence of precise synchronization

In some embodiments, the first signal may also be used for joint indication of at least one of the following purposes: waking up the target cell; triggering the target cell to transmit and/or receive the first object; or triggering the target cell to switch to the first state, etc. That is, when the base station detects the first signal of the terminal, it can be used for at least one of the following purposes: waking up the target cell; or triggering the target cell to transmit and/or receive the first object; triggering the target cell to switch to the first state, etc. The specific joint indication may be determined by at least one of the following: protocol stipulation, terminal pre-stored information, core network information, or terminal historical information.

In some embodiments, when the terminal can achieve coarse synchronization with the base station, the first signal can further carry indication information of at least one of waking up the target cell; triggering the target cell to transmit and/or receive the first object; or triggering the target cell to switch to the first state. For example, different time-domain or frequency-domain sequence patterns of the first signal correspond to different indication information. When the base station detects that the first signal adopts a specific time-domain or frequency domain sequence pattern, it obtains the corresponding indication information, and then transmits and/or receives at least one of a specific reference signal or a specific channel. In this way, the base station does not need to continuously transmit a synchronization signal for fine synchronization to the terminal, such as SSB with a period less than or equal to 160ms, that is, the base station can achieve energy savings on the network side while still being able to wake up according to the terminal's service requirements, be triggered to transmit and/or receive the first object, or switch to transmitting/receiving signals/channels in different energy-saving states, so as not to affect the service requirements of the terminal.

When the first signal implicitly or explicitly triggers the target cell to transmit and/or receive the first object, at least one of the specific reference signal or the specific channel can be triggered in a targeted manner. For example, according to the service requirements, the terminal needs to trigger the target cell to transmit SSB and/or tracking reference signal (TRS) for synchronization service, and the terminal needs to trigger the target cell to transmit positioning reference signal (PRS) and/or receive sounding reference signal (SRS) for positioning service, and the terminal needs to trigger the target cell to transmit SSB and/or CSI reference signal (CSI-RS) for measurement, the terminal needs to perform at least one of transmitting SSB, transmitting random access preamble or receiving physical random access channel (PRACH) for access. The base station only needs to transmit and/or receive the above reference signal and/or channel according to the first signal, and does not need to transmit and/or receive all reference signals and channels, thereby achieving energy saving on the network side.

When the first signal implicitly or explicitly triggers the target cell to switch to a first state, here, the first state can be one of at least one cell state, or different parameter configuration sets correspond to different cell states. Here, the cell state can be a cell energy-saving state, or a state in which the cell provides different services. For example, the terminal can select a cell based on its service requirement, such as the terminal may only need to perform radio resource management (RRM) measurements for cell selection; in this case, the target cell only needs to be in a light sleep state, transmit SSBs or CSI-RS with an 80ms period. The base station only needs to be triggered to transmit/receive reference signals/channels in a light sleep state according to the first signal, thereby achieving energy saving of the base station while meeting the service requirement of the terminal.

In some embodiments, the method in one embodiment of the present disclosure further includes:
obtaining a first response signal for the first signal.

In one embodiment of the present disclosure, the base station detects the first signal and transmits a first response signal for the first signal when the signal information of the first signal meets a first condition. For example, the base station transmits the first response signal when the signal information of the first signal meets a specific threshold or a specific value.

In some embodiments, the first response signal carries at least one of the following:
acknowledgment information of the first signal; where the acknowledgment information may be an OOK/ASK/FSK/PSK signal, such as an OFDM-based OOK/ASK/FSK/PSK signal;
feedback information of the first signal; where the feedback information may be an OOK/ASK/FSK/PSK signal, such as an OFDM-based OOK/ASK/FSK/PSK signal;
a first reference signal and/or first channel; where the first reference signal is a reference signal used for the terminal to determine whether to wake up a dormant cell subsequently, or a reference signal for providing a specific function for the terminal; for example, the specific function may be synchronization, measurement or positioning functions; the reference signal may be PSS, SSS, SSB, CSI-RS, TRS, PRS, PTRS, etc.; the first channel includes a downlink control channel, an uplink control channel, PBCH, PRACH, etc.; or
cell information of a cell that transmits the first response signal, such as cell identify information.

In some embodiments, the first response signal may be sent by at least one base station that receives the first signal.

For the first response signal being feedback information or acknowledgment information of the first signal, in order to avoid the base station being awakened by each terminal of the first signal, or being triggered to transmit/receive signals, or being triggered to switch to the first state of the cell, affecting the energy saving gain of the base station, after the base station detects the first signal, the base station can determine, based on internal implementation algorithm, whether to be awakened, or triggered to transmit/receive signals, or triggered to switch to the first state of the cell for acknowledgment or feedback, and further indicate to the terminal whether the cell is woken up, whether being triggered to transmit/receive signal, whether being triggered to switch to the first state of the cell, or whether the first signal has been received. On the one hand, it reduces unconditional wake-up of the base station; on the other hand, it decreases continuous transmission of the first signal by the terminal, thereby enabling both sides to reach mutual understanding.

For the first response signal being the first reference signal and/or the first channel, for example, after the base station detects the first signal, it transmits the first reference signal, such as PSS, SSS, TRS, SSB, etc., receives channel PRACH, PDCCH where paging is located, etc., which can be used for the terminal to perform subsequent communication behaviors, such as synchronization, RRM measurement, cell access, random access, and paging. The terminal receives and/or transmits the first reference signal and/or the first channel at a specific time interval after transmitting the first signal. After receiving the response signal transmitted by at least one cell, the terminal selects, through a specific algorithm such as a cell selection process, a target cell to provide services for the terminal. If, within a specific time period, there is no terminal access to other cells that transmit the response signal, other cells that transmit the response signal can enter a dormant state. If the terminal only receives the response signal transmitted by one cell, the current cell is used as the target cell, and the terminal accesses the target cell. In this method, the cell does not need to be in service all the time, thereby reducing energy consumption on the network side. The terminal can also access the target cell by detecting the first reference signal and/or the first channel transmitted/received by the target cell, thereby obtaining the service provided by the target cell and reducing the impact on service performance.

In addition, upon receiving the first response signal, the terminal can synchronize with the network side, and the terminal can further perform signal transmission with the target cell to provide a precondition for transmitting/receiving at least one of the following: a triggered target reference signal, a target channel, a transmitted target indication information or the second signal, i.e., synchronization between the transmitting and receiving parties.

In some embodiments, the method of the present disclosure further includes:
transmitting a second signal to a specific cell, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In some embodiments, the second target reference signal includes at least one of the following: primary synchronization signal (PSS), secondary synchronization signal (SSS), synchronization signal/physical broadcast channel signal block (SSB), TRS, positioning reference signal (PRS), phase-tracking reference signal (PT-RS), random access preamble, sounding reference signal (SRS), demodulation reference signal (DMRS), or CSI reference signal (CSI-RS).

In some embodiments, the second target channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

In one embodiment of the present disclosure, based on the first response signal, the terminal can determine to which target cell to transmit the second signal. That is, the specific cell is one or more cells among the above target cells. Specifically, the terminal may randomly determine one or more cells (that is, specific cells) in the target cells that transmit the first response signal, or may determine one or more cells (that is, the specific cells) in the target cells that transmit the first response signal in other ways.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

As an implementation manner, the second signal carries at least one of the following:
wake-up cell indication information used to indicate whether to wake up a specific cell;
cell identity related information used to indicate cell information related to transmitting/receiving of wake-up or trigger signals/channels;
second object transmitting/receiving indication information used to indicate a second object transmitted/received by a specific cell;
function trigger indication information used to instruct a specific cell to turn on or off a specific function, such as measurement, synchronization, positioning, energy saving, access, and specific service transmission;
terminal specific identity used to indicate a specific type of the terminal or terminal identity, such as terminal type identity, terminal version identity, terminal identity for supporting specific services, and related indication on whether the target cell can be woken up;
terminal demand information related identity used to indicate a current service requirement of the terminal, such as access, measurement, synchronization, positioning, energy saving, and specific service transmission requirements; or, to indicate a current service requirement of the terminal, such as enhanced mobile broadband (eMBB) service, extended reality (XR) service, Ultra-Reliable and Low Latency Communications (URLLC) service, massive machine type of communication (mMTC) service, ambient Internet of Things (AIoT) service, etc.; or
cell state indication information used to instruct a specific cell to switch between at least two states, or to switch to a second state.

When the terminal transmits the first signal, the terminal may also transmit a second signal to further provide additional information to the base station. The additional information includes at least one of the following: enhanced or supplementary information of the first signal, i.e., information that improves reception performance of the first signal or provides supplementary information of the first signal.

For the second signal including information used to improve the reception performance of the first signal, for example, the second signal is a repetition signal of the first signal, or the second signal carries information related to the first signal, but the first signal and the second signal are two different signals. Transmitting the second signal by the terminal can enhance the base station's ability to detect the terminal and obtain the information carried by the first signal and/or the second signal.

For the second signal used to provide supplementary information of the first signal, for example, the first signal is based on a broadcast transmission when the terminal and the base station are not synchronized or not finely synchronized, and is used as a signal for the base station to discover the terminal. The second signal can be transmitted as supplementary information of the terminal, such as the version or type of the terminal, to allow target cells capable of serving the terminal to be discovered. After the base station detects the first signal, the base station detects the second signal; if a cell can provide services for the terminal, the base station performs at least one of the following: waking up the cell as a target cell; triggering the cell to transmit or receive the second object; or triggering the cell to switch to the second state. In this way, by transmitting the second signal, the accuracy of waking up or triggering the target cell can be improved, thereby enhancing the energy-saving performance of the network.

After receiving the first response signal, the terminal transmits a second signal to further indicate at least one of waking up the target cell, triggering the target cell to transmit or receive the second object; or triggering the target cell to switch to the second state. Here, after receiving the first response signal, such as signals PSS, SSS, TRS, SSB for synchronization, the terminal can synchronize with the base station. The terminal can transmit the second signal carrying indication information for the target cell, which is used for at least one of waking up the target cell, triggering the target cell to transmit or receive the second object, or triggering the target cell to switch to the second state. Here, the target cell can be specifically indicated by the second signal, or implicitly indicated by the second signal having a specific association relationship with the response signal transmitted by the target cell. Here, the target cell can transmit a synchronization signal according to the terminal's service requirements, thereby obtaining more precise indication information, such as at least one of indication information related to being woken up by the terminal, indication information for being triggered to transmit or receive the second object, or indication information for being triggered to switch to a specific cell state, without needing to continuously provide synchronization signals for the terminal, thereby achieving energy savings on the network side.

In some embodiments, the second signal may also be used for joint indication of at least one of the following purposes: waking up the specific cell; triggering the specific cell to transmit and/or receive the first object; or triggering the specific cell to switch to the first state, etc. That is, when the base station detects the second signal of the terminal, it can be used for at least one of the following purposes: waking up the specific cell; triggering the specific cell to transmit and/or receive the second object; or triggering the specific cell to switch to the second state, etc. The specific joint indication may be determined by at least one of the following: protocol stipulation, terminal pre-stored information, core network information, or terminal historical information.

In some embodiments, when the terminal can achieve coarse synchronization with the base station, the second signal can further carry indication information of at least one of waking up the specific cell; triggering the specific cell to transmit and/or receive the second object; or triggering the specific cell to switch to the second state. For example, different time-domain or frequency-domain sequence patterns of the second signal correspond to different indication information. When the base station detects that the second signal adopts a specific time-domain or frequency domain sequence pattern, it obtains the corresponding indication information, and then transmits and/or receives at least one of a specific reference signal or a specific channel. In this way, the base station does not need to continuously transmit a synchronization signal for fine synchronization to the terminal, such as SSB with a period less than or equal to 160ms, that is, the base station can achieve energy savings on the network side while still being able to wake up according to the terminal's service requirements, or be triggered to transmit and/or receive the second object, or switch to transmitting/receiving signals/channels in different energy-saving states, so as not to affect the service requirements of the terminal.

When the second signal implicitly or explicitly triggers the specific cell to transmit and/or receive the second object, at least one of the specific reference signal or the specific channel can be triggered in a targeted manner. For example, according to the service requirements, the terminal needs to trigger the target cell to transmit SSB and/or tracking reference signal (TRS) for synchronization service, and the terminal needs to trigger the target cell to transmit positioning reference signal (PRS) and/or receive sounding reference signal (SRS) for positioning service, and the terminal needs to trigger the target cell to transmit SSB and/or CSI reference signal (CSI-RS) for measurement, the terminal needs to perform at least one of transmitting SSB, transmitting random access preamble or receiving physical random access channel (PRACH) for access. The base station only needs to transmit and/or receive the above reference signal and/or channel according to the second signal, and does not need to transmit and/or receive all reference signals and channels, thereby achieving energy saving on the network side.

When the second signal implicitly or explicitly triggers the target cell to switch to a second state, here, the second state can be one of at least one cell state, or different parameter configuration sets correspond to different cell states. Here, the cell state can be a cell energy-saving state, or a state in which the cell provides different services. For example, the terminal can select a cell based on its service requirement, such as the terminal may only need to perform radio resource management (RRM) measurements for cell selection; in this case, the target cell only needs to be in a light sleep state, transmit SSBs or CSI-RS with an 80ms period. The base station only needs to be triggered to transmit/receive reference signals/channels in a light sleep state according to the second signal, thereby achieving energy saving of the base station while meeting the service requirement of the terminal.

In some embodiments, the method of the present disclosure further includes:
obtaining a second response signal; where the second response signal is a response signal for a target signal, and the target signal includes the second signal or includes the first signal and the second signal.

In one embodiment of the present disclosure, the base station may transmit a first response signal after receiving a first signal and transmit a second response signal after receiving a second signal, or may transmit a second response signal after receiving the first signal and the second signal.

In some embodiments, the second response signal carries at least one of the following:
acknowledgment information of the target signal; where the acknowledgment information may be an OOK/ASK/FSK/PSK signal, such as an OFDM-based OOK/ASK/FSK/PSK signal;
feedback information of the target signal; where the feedback information may be an OOK/ASK/FSK/PSK signal, such as an OFDM-based OOK/ASK/FSK/PSK signal;
a second reference signal and/or second channel; where the second reference signal is a reference signal used for the terminal to determine whether to wake up a dormant cell subsequently, or a reference signal for providing a specific function for the terminal; for example, the specific function may be synchronization, measurement or positioning functions; the reference signal may be SSB, CSI-RS, TRS, random access preamble, etc.; the second channel includes a downlink control channel and/or an uplink control channel; or
cell information of a cell that transmits the second response signal, such as cell identify information.

In some embodiments, the second response signal may be transmitted by the target cell that receives the second signal.

For the second response signal being feedback information or acknowledgment information of the second signal, in order to avoid the base station being awakened by each terminal of the second signal, or being triggered to transmit/receive signals, or being triggered to switch to the second state of the cell, affecting the energy saving gain of the base station, after the base station detects the second signal, the base station can determine, based on internal implementation algorithm, whether to be woken up; or, it may be explicitly indicated by the second signal whether to be woken up, triggered to transmit/receive signals, or triggered to switch to the second cell state. The base station can then confirm or provide feedback, further indicated the terminal whether the cell is woken up, whether being triggered to transmit/receive signal, whether being triggered to switch to the second state of the cell, or whether the second signal has been received. On the one hand, it reduces unconditional wake-up of the base station; on the other hand, it responds to the second signal transmitted by the terminal, thereby enabling both sides to reach mutual understanding.

For the second response signal being the second reference signal and/or the second channel, for example, after the base station detects the second signal, it transmits the second reference signal, such as PSS, SSS, TRS, SSB, etc., receives channel PRACH, PDCCH where paging is located, etc., which can be used for the terminal to perform subsequently at least one of synchronization, RRM measurement, cell access, random access, or paging. The terminal receives and/or transmits the second reference signal and/or the second channel at a specific time interval after receiving the second signal. After receiving the response signal, the target cell provides service to the terminal. The cell that does not transmit the second response signal cannot be accessed by the terminal within a specific time period, and the cell that does not transmit the second response signal enters a dormant state without being in a service state all the time, thereby reducing energy consumption on the network side.

In some embodiments, the method of the present disclosure further includes:
at a first moment, receiving and/or transmitting, in a first specific cell, a first specific reference signal and/or a first specific channel in an RRC idle state or an RRC inactive state;
where the first moment includes at least one of the following:
   a moment that is offset by a first duration from a transmission time of the first signal;
   a moment that is offset by a second duration from a transmission time of the second signal;
   a moment that is offset by a third duration from a reception time of a first response signal to the first signal; or,
   a moment that is offset by a fourth duration from a reception time of a second response signal; where the second response signal is a response signal to the second signal, or a response signal to both the first signal and the second signal;
   where the first specific cell includes at least one of the following:
      at least one of a target cell indicated by the first signal or a specific cell indicated by the second signal;
      a cell that transmits the first response signal;
      a cell that transmits the second response signal;
      a cell indicated by the first response signal; or,
      a cell indicated by the second response signal.

The first specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In one embodiment of the present disclosure, in case that the above first signal is used to wake up the target cell, and/or in case that the above second signal is used to wake up the specific cell, at a first moment, a first specific reference signal or a first specific channel in an RRC idle state or an RRC inactive state is received or transmitted in a first specific cell.

In some embodiments, the above first specific reference signal includes at least one of public land mobile network (PLMN) selection information, location registration related information, synchronization signal/physical broadcast channel signal block (SSB)/system information block (SIB), cell selection/reselection information, tracking reference signal (TRS), broadcast message, paging message, or random access related information, etc.

In some embodiments, the method of the present disclosure further includes:
at a second moment, transmitting and/or receiving a second specific reference signal and/or a second specific channel of a second specific cell;
where the second moment includes at least one of the following:
   a moment that is offset by a first duration from a transmission time of the first signal;
   a moment that is offset by a second duration from a transmission time of the second signal;
   a moment that is offset by a third duration from a reception time of a first response signal to the first signal; or,
   a moment that is offset by a fourth duration from a reception time of a second response signal; where the second response signal is a response signal to the second signal, or a response signal to both the first signal and the second signal;
   where the second specific cell includes at least one of the following:
   at least one of a target cell indicated by the first signal or a specific cell indicated by the second signal;
   a cell that transmits the first response signal;
   a cell that transmits the second response signal;
   a cell indicated by the first response signal; or,
   a cell indicated by the second response signal.

The second specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal associated with the first signal, or a reference signal associated with the second signal. For example, the second specific reference signal includes an SSB, a CSI-RS or a synchronization signal, etc.

The second specific channel includes at least one of a first target channel indicated by a first signal, a second target channel indicated by a second signal, a first channel indicated by a first response signal, a second channel indicated by a second response signal, a channel agreed upon by a protocol, a channel configured by a high layer, a channel associated with the first signal, or a channel associated with the second signal.

In one embodiment of the present disclosure, in case that the above first signal is used to trigger the target cell to transmit and/or receive a first object, and/or in case that the above second signal is used to trigger a specific cell to transmit and/or receive a second object, at a second moment, a second specific reference signal or a second specific channel of the second specific cell is transmitted or received.

In some embodiments, the method of the present disclosure further includes:
at a third moment, transmitting and/or receiving a third specific reference signal and/or a third specific channel in a specific cell state;
where the third moment includes at least one of the following:
   a moment that is offset by a first duration from a transmission time of the first signal;
   a moment that is offset by a second duration from a transmission time of the second signal;
   a moment that is offset by a third duration from a reception time of a first response signal to the first signal; or,
   a moment that is offset by a fourth duration from a reception time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

In some embodiments, the third specific reference signal includes at least one of the following: primary synchronization signal (PSS), secondary synchronization signal (SSS), synchronization signal/physical broadcast channel signal block (SSB), TRS, positioning reference signal (PRS), phase-tracking reference signal (PT-RS), random access preamble, sounding reference signal (SRS), demodulation reference signal (DMRS), or CSI reference signal (CSI-RS).

In some embodiments, the third specific channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (Physical Uplink Shared Channel, PUSCH).

In one embodiment of the present disclosure, in case that the above first signal is used to trigger the target cell to switch to the first state, and/or in case that the above second signal is used to trigger the specific cell to switch to the second state, at a third moment, a third specific reference signal and/or a third specific channel in the specific cell state is transmitted and/or received.

It is to be noted that the third moment, the second moment and the first moment in the embodiment of the present disclosure may be the same or different.

The following describes a method for generating an OOK/ASK/FSK/PSK signal in conjunction with an embodiment 1.

Embodiment 1: a method for generating an OOK/ASK/FSK/PSK signal based on OFDM.

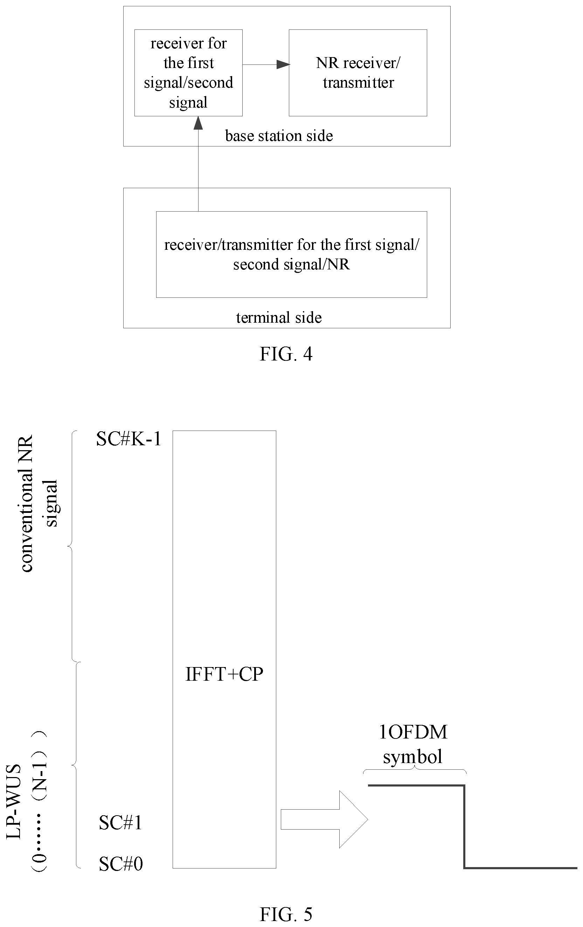

As shown in FIG. 3 and FIG. 4, a transmitter of the terminal for transmitting the first signal and/or the second signal may be a transmitter independent of a transmitter of an uplink NR signal, or may be the same transmitter.

A receiver of the base station for receiving the first signal and/or the second signal may be a receiver independent of a receiver of an uplink NR signal, or may be the same receiver.

The following describes a generation method based on multi-carrier amplitude shift keying (MC-ASK), such as generation of on-off keying (OOK) signal based on OFDM.

According to a bit number of ASK and frequency domain resources/IFFT points occupied by each bit, waveform generation of MC-ASK can include the following four optional waveform generation methods:

### Method 1:

OOK-1: as shown in FIG. 5, a low power wake up signal (LP-WUS) includes N subcarriers (SC). After performing inverse fast Fourier transform (IFFT) and adding a cyclic prefix (CP) to the LP-WUS, one OFDM symbol corresponds to a single bit.

The subcarrier (SC) of the low power wakeup signal (LP-WUS) is:
OOK=1 means that all SCs are used for modulation, corresponding to bit "1", or any one or several ones of K-order modulation symbols are corresponding to bit "1";
OOK=0 means that all SCs are zero power (from a baseband perspective), corresponding to bit "0", or any one or several ones of K-order modulation symbols are corresponding to bit "0".

In case that the first signal is an OOK-1 signal, the 1-bit information can be used to trigger a signal of one OFDM symbol. In order for the base station to detect the terminal, the signal can be transmitted repeatedly N times. The receiver at the base station can detect the user's signal continuously or in a specific time period. The specific detection method depends on implementation of the base station or is based on relevant information of the first signal sent by the terminal.

### Method 2:

OOK-2: parallel M-bits OOK in frequency domain.

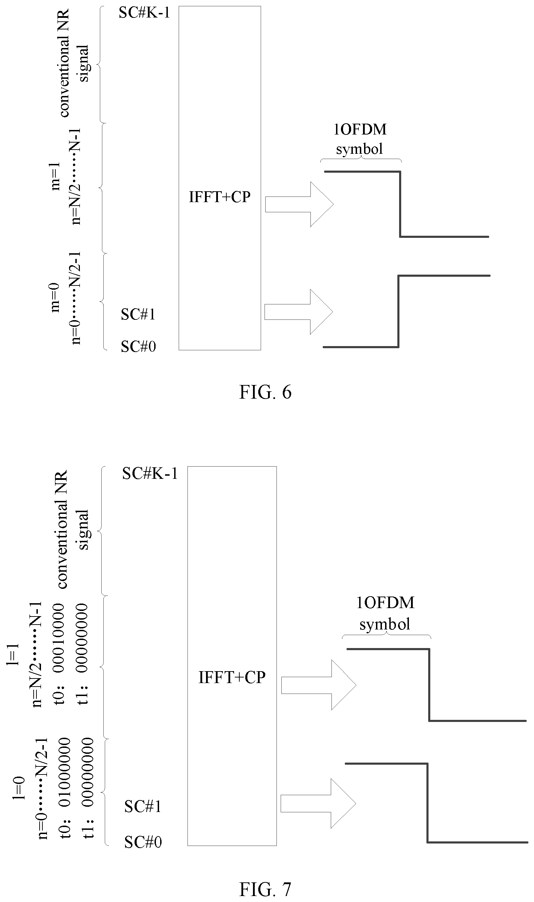

The N SCs of LP-WUS are further divided into M segments, each of which includes N/2 subcarriers, as shown in FIG. 6, where M=2, and may be present between and/or around the segments. After performing inverse fast Fourier transform (IFFT) and adding a cyclic prefix (CP) to the LP-WUS, the LP-WUS corresponds to parallel M-bits OOK in the frequency domain. The SC of LP-WUS is:
OOK=1 means that all SCs in the segment have been modulated, corresponding to bit "1", or any one or several ones of K-order modulation symbols are corresponding to bit "1";
OOK=0 means that all SCs in the segment are zero power (from a baseband perspective), corresponding to bit "0", or any one or several ones of K-order modulation symbols are corresponding to bit "0".

In case that the first signal is an OOK-2 signal, M bits in the frequency domain can carry a terminal discovery signal; for example, the first signal is a specific sequence, such as M bits of 1, the base station can detect the terminal based on a sequence with a specific pattern, such as: "1010...1". The receiver at the base station can detect the user's signal continuously or in a specific time period. The specific detection method depends on implementation of the base station or is based on relevant information of the first signal sent by the terminal.

### Method 3:

OOK-3: multi-tone single-bit OOK.

A low power wake up signal (LP-WUS) includes N subcarriers (SC). The N SCs of LP-WUS are divided into L segments, as shown in FIG. 7, where L=2. There is no guard band between segments, but there may be guard bands around the segments. After performing inverse fast Fourier transform (IFFT) and adding a cyclic prefix (CP) to the LP-WUS, a multi-tone single-bit OOK is obtained. t0 and t1 in FIG. 7 represent sequences corresponding to 0 and 1, respectively. The SC of LP-WUS is:
OOK=1 means that one subcarrier of each segment (known to the UE) is modulated, and the rest of the SC is zero power (from a baseband perspective), corresponding to bit "1";
OOK=0 means that all SCs in all segments are zero power ((from a baseband perspective), corresponding to bit "0".

In case that the first signal is an OOK-3 signal, the same frequency domain sequence information can be carried in different segments, or different frequency domain sequence information can be carried in different segments. Under certain time/frequency domain deviations on the base station side, the receiver can continuously detect in the time domain and/or perform frequency domain scanning for detecting the first signal; it can also detect the user's signal in a specific time period or within a specific frequency domain resource range. The specific detection method depends on implementation of the base station or is based on relevant information of the first signal sent by the terminal.

### Method 4: time domain transformation M-bit OOK.

N SCs of OOK-4 are generated by transformation (DFT/least squares).

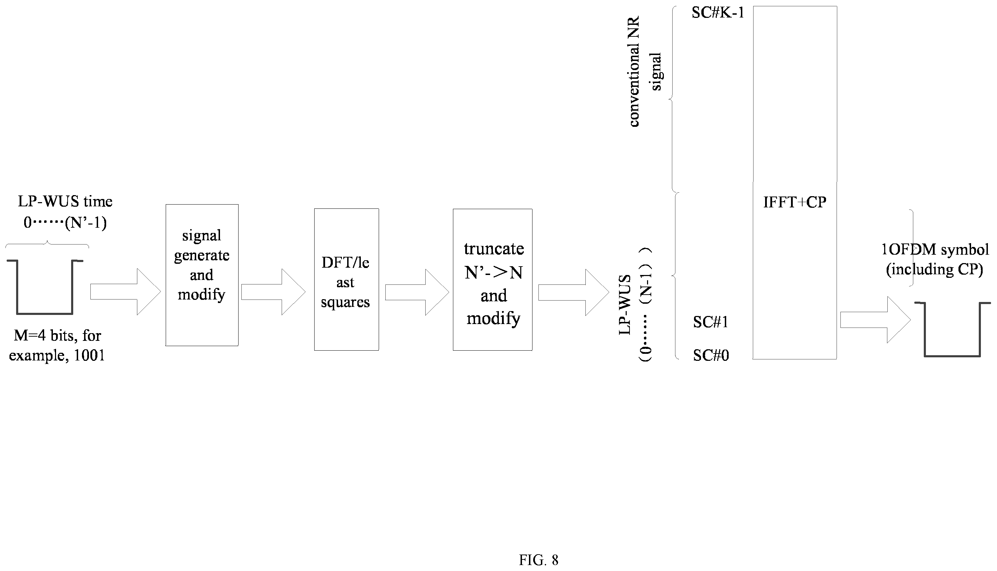

As shown in FIG. 8, N' samples are generated by M bits, and the N SCs of the LP-WUS are generated by transformation (DFT/least squares); signal modulation may or may not be used; truncation or other additional modulation may or may not be used, and if no other additional modulation is used, N is the same as N'. After performing inverse fast Fourier transform (IFFT) and adding a cyclic prefix (CP) to the LP-WUS, OOK-4 is obtained.

OOK-4 can be considered as an example of an OOK signal based on a single carrier (such as DFT-S-OFDM), and can also be used as a signal generation method independent of an uplink single carrier (such as DFT-S-OFDM).

The first signal/the second signal may also be an M-bit multi-carrier FSK signal, and specific examples are as follows.

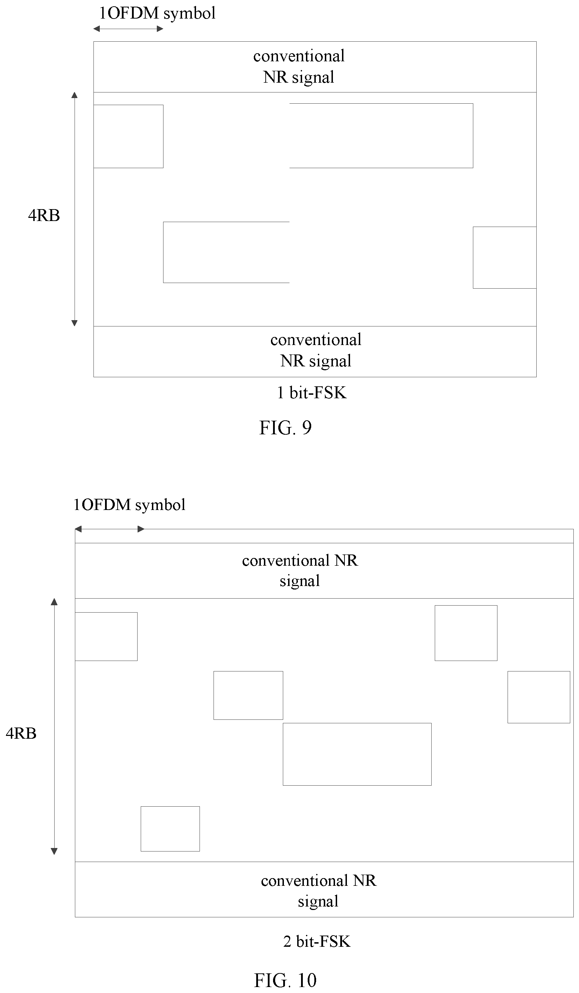

FSK-1: N SCs are divided into M pairs of segments, where M is an integer greater than or equal to 1, as shown in FIG. 9 (M=2) and FIG. 10 (M=4); potential guard bands may exist between and around them. One segment includes one subcarrier or multiple consecutive SCs; in a pair of segments, one segment is modulated and the other segment is zero power (from a baseband perspective).

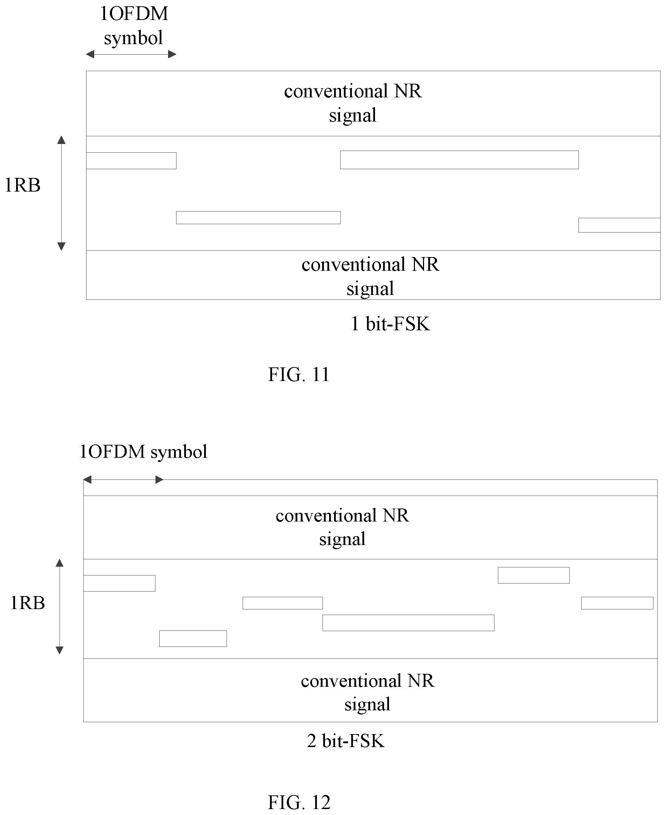

FSK-2: N SCs are separated into 2^{M} segments, where M is an integer greater than or equal to 0; as shown in FIG. 11, M=1, that is, N SCs are separated into 2 segments; as shown in FIG. 12, M=2, that is, N SCs are separated into 4 segments, potential guard bands may exist between and around the segments. One segment includes one subcarrier or multiple consecutive SCs; one segment among the 2^{M} segments is modulated, and the other segments of the SC are zero power (from a baseband perspective).

The first signal/second signal can also be based on CP-OFDM, which can multiplex the synchronization signal of NR in the related technology, and can provide a higher data transmission rate. Further, since the LP-WUR CP-OFDM signal is orthogonal to NR transmissions, the guard-band requirement between them can be relaxed.

In the embodiments of the present disclosure, in case that functions of the first signal and/or the second signal are different, their transceivers (transceivers) are different.

For example,
in case that the first signal is a discovery signal (i.e., the first signal is used to for terminal discover), the transceiver of the first signal is independent of the transceiver of the NR. The first signal at least includes an OFDM-based OOK/ASK/FSK/PSK signal.
in case that the first signal/second signal is a trigger signal (i.e., the first signal or the second signal is used to wake up a cell, trigger a cell to transmit and/or receive a signal or channel, and/or trigger a cell to switch states), the transceiver of the first signal or the second signal is independent of the transceiver of the NR, and may also be the same transceiver as the transceiver of the NR. The trigger signal at least includes an OFDM-based OOK/ASK/FSK/PSK signal.

The second signal is a trigger signal based on the NR signal, that is, CP-OFDM signals are supported on uplink/downlink, and DFT-S-OFDM signals are supported on the uplink. The transceiver of the signal is the same as the transceiver of the NR.

In the embodiment of the present disclosure, in case that the receiver for the first signal and/or the second signal is independent of the receiver of the uplink NR signal, the base station on the network side does not need to keep the corresponding NR receiver always on, but only needs to detect the first signal and/or the second signal. The receiver for the signal consumes only about one-tenth of the power of the NR receiver, thereby achieving energy saving on the network side.

In case that the transmitter for the first signal and/or the second signal is the same as the transmitter of the uplink NR signal, the terminal can enable the base station to discover it only through a low-power transmitter.

In case that the first signal and/or the second signal is an OFDM-based OOK/ASK/FSK/PSK modulated signal, the architecture of the NR transceiver in the related art can be utilized to further simplify the complexity of the transceiver, and the detection based on OOK/ASK/FSK/PSK modulation can greatly reduce the power consumption of the receiving end, thereby achieving energy saving.

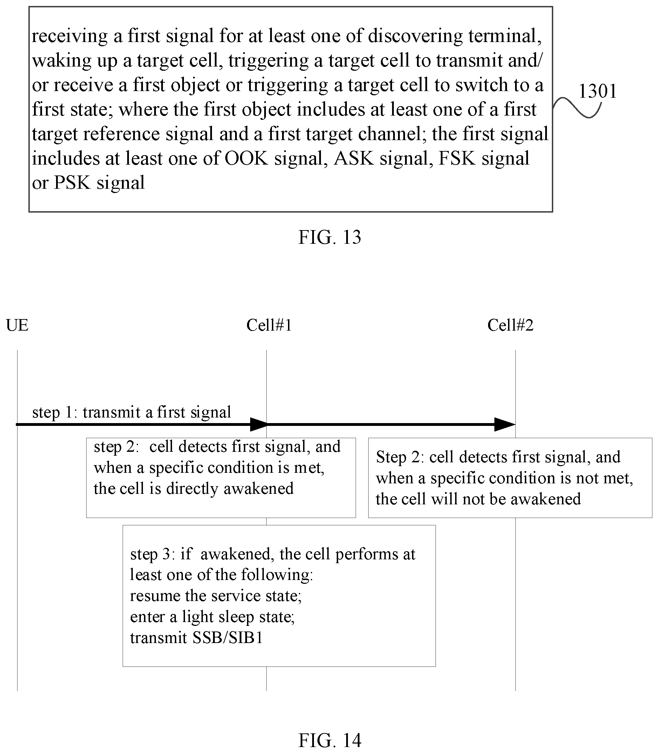

As shown in FIG. 13, one embodiment of the present disclosure further provides an information processing method, performed by a network device. The method includes:
Step 1301: receiving a first signal for at least one of the following:
discovering terminal; waking up a target cell; triggering a target cell to transmit and/or receive a first object; or triggering a target cell to switch to a first state; where the first object includes at least one of a first target reference signal or a first target channel;
The first signal includes at least one of the following: an on-off keying (OOK) signal; an amplitude shift keying (ASK) signal; a frequency shift keying (FSK) signal; or a phase shift keying (PSK) signal.

In some embodiments, the above network device includes a base station where the target cell is located, which can transmit and/or receive an OFDM-based OOK/ASK/FSK/PSK signal and/or NR signal.

In some embodiments, the first signal may be transmitted through a first signal dedicated transmitter or through an NR transmitter.

In some embodiments, the target cell may continuously receive and detect the first signal, may periodically receive and detect the first signal, or may semi-continuously receive and detect the first signal. The specific receiving algorithm may be determined by the internal algorithm of the target cell.

In some embodiments, the target cell includes at least one of a dormant cell, a closed cell, a sleeping cell, or an energy-saving cell. The target cell may be a primary serving cell or a secondary cell, and the target cell has a cell identity (ID).

In some embodiments, the first signal includes signal information and indication information. The signal information includes at least one of amplitude, frequency, carrier, bandwidth, phase, power or energy of the first signal. The indication information is used to indicate that the first signal is used for at least one of the following: discovering terminal; waking up a target cell; triggering a target cell to transmit and/or receive a first object; or triggering a target cell to switch to a first state.

The above OOK/ASK/FSK/PSK signal is a low-power signal. The network side device can detect and process the OOK/ASK/FSK/PSK signal by using envelope detection. In this way, the low-power signal enables the terminal to communicate with a dormant cell or a cell in an energy-saving state without synchronization, thereby waking up the dormant cell or triggering the dormant cell to wake up for providing services.

In one embodiment of the present disclosure, the above OOK/ASK/FSK/PSK signal is a low-power signal different from the OFDM signal, and the processing method of the low-power signal is different from the processing method of the OFDM signal in the related technology, the cell in the sleep state or energy-saving state can process the low-power signal. In this way, the low-power signal enables the terminal to communicate with a dormant cell or a cell in an energy-saving state without synchronization, thereby waking up the dormant cell or triggering the dormant cell to wake up for providing services.

In some embodiments, the first signal is an OFDM based signal, that is, the first signal is an OFDM-based OOK/ASK/FSK/PSK signal.

In case that the first signal is an OFDM-based OOK/ASK/FSK/PSK signal, the architecture of the new radio (NR) transceiver in the related art can be used, to further avoid adding new transceivers, thereby simplifying complexity of the transceiver. The detection of OOK/ASK/FSK/PSK modulated signals can be performed via envelope, filtering, or phase detection without requiring an Inverse Fast Fourier Transform (IFFT) operation. This significantly reduces power consumption of a receiving end, thereby achieving an energy-saving effect.

In some embodiments, the first signal carries at least one of the following:
information related to discovering terminal, such as amplitude/phase/power/energy or other related information of a signal used for signal detection;
information related to waking up the target cell, for example, which includes indication information for waking up the target cell or a cell group where the target cell is located, and information related to an identity of the target cell or the cell group where the target cell is located, where the indication information for waking up the target cell is used to indicate whether to wake up the target cell;
information related to triggering a target cell, for example, which includes indication information of the target cell or a cell group where the target cell is located, and information related to an identity of the target cell or the cell group where the target cell is located; where the indication signal for triggering the target cell is used to indicate a target cell to be triggered; or
information related to triggering a target cell to transmit and/or receive the first object, for example, which includes indication information of transmitting and/or receiving a first target reference signal, where the indication information is used to indicate at least one of the first target reference signal orthe first target channel transmitted or received by the target cell;
information related to triggering the target cell to switch to the first state, for example, which includes cell state indication information.

As an implementation manner, the first signal carries at least one of the following:
wake-up cell indication information used to indicate whether to wake up the target cell;
cell identity related information used to indicate cell information related to transmitting/receiving of wake-up or trigger signals/channels;
first object transmitting/receiving indication information used to indicate a first object transmitted/received by the target cell;
function trigger indication information used to instruct the target cell to turn on or off a specific function, such as measurement, synchronization, positioning, energy saving, access, and specific service transmission;
terminal specific identity used to indicate a specific type of the terminal or terminal identity, such as terminal type identity, terminal version identity, terminal identity for supporting specific services, and related indication on whether the target cell can be woken up;
terminal demand information related identity used to indicate a current service requirement of the terminal, such as access, measurement, synchronization, positioning, energy saving, and specific service transmission requirements; or, to indicate a current service requirement of the terminal, such as enhanced mobile broadband (eMBB) service, extended reality (XR) service, Ultra-Reliable and Low Latency Communications (URLLC) service, massive machine type of communication (mMTC) service, ambient Internet of Things (AIoT) service, etc.; or
cell state indication information used to instruct the target cell to switch between at least two states, or to switch to the first state.

In one embodiment of the present disclosure, the network side device may wake up the target cell after receiving the above first signal for a certain period of time, and triggers the target cell to transmitting and/or receiving the first object, or triggers the target cell to switch to the first state.

In case that the terminal does not receive any synchronization signal sent by the target cell, such as primary synchronization signal (PSS), secondary synchronization signal (SSS), synchronization signal/physical broadcast channel signal block (SSB), tracking reference signal (TRS), etc., or receives a synchronization signal sent by the target cell at a longer time interval, such as PSS, SSS, SSB, TRS, etc., the terminal cannot achieve synchronization or precise synchronization with the base station, and then the terminal cannot transmit any signal to the base station based on the NR signal in the related art. In the embodiment of the present disclosure, the terminal transmits a first signal which is a modulated signal based on OOK/ASK/FSK/PSK, and the base station can detect the first signal based on the amplitude/power/energy/phase and other related information of the first signal without requiring precise synchronization with the terminal, thereby achieving the effect of discovering the terminal in the absence of precise synchronization
In some embodiments, the first signal may also be used for joint indication of at least one of the following purposes: waking up the target cell; triggering the target cell to transmit and/or receive the first object; or triggering the target cell to switch to the first state, etc. That is, when the base station detects the first signal of the terminal, it can be used for at least one of the following purposes: waking up the target cell; triggering the target cell to transmit and/or receive the first object; or triggering the target cell to switch to the first state, etc. The specific joint indication may be determined by at least one of the following: protocol stipulation, terminal pre-stored information, core network information, or terminal historical information.

In some embodiments, when the terminal can achieve coarse synchronization with the base station, the first signal can further carry indication information of at least one of waking up the target cell; triggering the target cell to transmit and/or receive the first object; or triggering the target cell to switch to the first state. For example, different time-domain or frequency-domain sequence patterns of the first signal correspond to different indication information. When the base station detects that the first signal adopts a specific time-domain or frequency domain sequence pattern, it obtains the corresponding indication information, and then transmits and/or receives at least one of a specific reference signal or a specific channel. In this way, the base station does not need to continuously transmit a synchronization signal for fine synchronization to the terminal, such as SSB with a period less than or equal to 160ms, that is, the base station can achieve energy savings on the network side while still being able to wake up according to the terminal's service requirements, be triggered to transmit and/or receive the first object, or switch to transmitting/receiving signals/channels in different energy-saving states, so as not to affect the service requirements of the terminal.

When the first signal implicitly or explicitly triggers the target cell to transmit and/or receive the first object, at least one of the specific reference signal or the specific channel can be triggered in a targeted manner. For example, according to the service requirements, the terminal needs to trigger the target cell to transmit SSB and/or tracking reference signal (TRS) for synchronization service, and the terminal needs to trigger the target cell to transmit positioning reference signal (PRS) and/or receive sounding reference signal (SRS) for positioning service, and the terminal needs to trigger the target cell to transmit SSB and/or CSI reference signal (CSI-RS) for measurement, the terminal needs to perform at least one of transmitting SSB, transmitting random access preamble or receiving physical random access channel (PRACH) for access. The base station only needs to transmit and/or receive the above reference signal and/or channel according to the first signal, and does not need to transmit and/or receive all reference signals and channels, thereby achieving energy saving on the network side.

When the first signal implicitly or explicitly triggers the target cell to switch to a first state, here, the first state can be one of at least one cell state, or different parameter configuration sets correspond to different cell states. Here, the cell state can be a cell energy-saving state, or a state in which the cell provides different services. For example, the terminal can select a cell based on its service requirement, such as the terminal may only need to perform radio resource management (RRM) measurements for cell selection; in this case, the target cell only needs to be in a light sleep state, transmit SSBs or CSI-RS with an 80ms period. The base station only needs to be triggered to transmit/receive reference signals/channels in a light sleep state according to the first signal, thereby achieving energy saving of the base station while meeting the service requirement of the terminal.

In some embodiments, after receiving the first signal, the method further includes:
transmitting a first response signal for the first signal.

In some embodiments, the transmitting a first response signal for the first signal includes:
transmitting the first response signal for the first signal when signal information of the first signal meets a first condition;
where the signal information includes at least one of amplitude, frequency, carrier, bandwidth, phase, power or energy of the first signal.

For example, the base station detects the first signal to obtain M-bit information carried by the first signal, where M is greater than or equal to 0, and the first signal includes signal information and/or carries indication information. When the base station detects that the signal information of the first signal meets a specific threshold or a specific value, the base station transmits a first response signal.

In some embodiments, the method of the present disclosure further includes:
in case that the signal information of the first signal meets a first condition, performing at least one of the following:
discovering a terminal; waking up a target cell; triggering the target cell to transmit or receive a first object; or triggering the target cell to switch to a first state.

The signal information includes at least one of amplitude, frequency, carrier, bandwidth, phase, power or energy of the first signal.

In some embodiments, the first response signal carries at least one of the following:
acknowledgment information of the first signal; where the acknowledgment information may be an OOK/ASK/FSK/PSK signal, such as an OFDM-based OOK/ASK/FSK/PSK signal;
feedback information of the first signal; where the feedback information may be an OOK/ASK/FSK/PSK signal, such as an OFDM-based OOK/ASK/FSK/PSK signal;
a first reference signal and/or first channel; where the first reference signal is a reference signal used for the terminal to determine whether to wake up a dormant cell subsequently, or a reference signal for providing a specific function for the terminal; for example, the specific function may be synchronization, measurement or positioning functions; the reference signal may be PSS, SSS, SSB, CSI-RS, TRS, PRS, PTRS, etc.; the first channel includes a downlink control channel, an uplink control channel, PBCH, PRACH, etc; or
cell information of a cell that transmits the first response signal, such as cell identify information.

In some embodiments, the first response signal may be sent by at least one base station that receives the first signal.

For the first response signal being feedback information or acknowledgment information of the first signal, in order to avoid the base station being awakened by each terminal of the first signal, or being triggered to transmit/receive signals, or being triggered to switch to the first state of the cell, affecting the energy saving gain of the base station, after the base station detects the first signal, the base station can determine, based on internal implementation algorithm, whether to be awakened, or triggered to transmit/receive signals, or triggered to switch to the first state of the cell for acknowledgment or feedback, and further indicate to the terminal whether the cell is woken up, whether being triggered to transmit/receive signal, whether being triggered to switch to the first state of the cell, or whether the first signal has been received. On the one hand, it reduces unconditional wake-up of the base station; on the other hand, it decreases continuous transmission of the first signal by the terminal, thereby enabling both sides to reach mutual understanding.

For the first response signal being the first reference signal and/or the first channel, for example, after the base station detects the first signal, it transmits the first reference signal, such as PSS, SSS, TRS, SSB, etc., receives channel PRACH, PDCCH where paging is located, etc., which can be used for the terminal to perform subsequent communication behaviors, such as synchronization, RRM measurement, cell access, random access, and paging. The terminal receives and/or transmits the first reference signal and/or the first channel at a specific time interval after transmitting the first signal. After receiving the response signal transmitted by at least one cell, the terminal selects, through a specific algorithm such as a cell selection process, a target cell to provide services for the terminal. If, within a specific time period, there is no terminal access to other cells that transmit the response signal, other cells that transmit the response signal can enter a dormant state. If the terminal only receives the response signal transmitted by one cell, the current cell is used as the target cell, and the terminal accesses the target cell. In this method, the cell does not need to be in service all the time, thereby reducing energy consumption on the network side. The terminal can also access the target cell by detecting the first reference signal and/or the first channel transmitted/received by the target cell, thereby obtaining the service provided by the target cell and reducing the impact on service performance.

In addition, upon receiving the first response signal, the terminal can synchronize with the network side, and the terminal can further perform signal transmission with the target cell to provide a precondition for transmitting/receiving at least one of the following: a triggered target reference signal, a target channel, a transmitted target indication information or the second signal, i.e., synchronization between the transmitting and receiving parties.

In some embodiments, the method of the present disclosure further includes:
obtaining a second signal, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In one embodiment of the present disclosure, based on the first response signal, the terminal can determine to which target cell to transmit the second signal. That is, the specific cell is one or more cells among the above target cells. Specifically, the terminal may randomly determine one or more cells (that is, specific cells) in the target cells that transmit the first response signal, or may determine one or more cells (that is, the specific cells) in the target cells that transmit the first response signal in other ways.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

As an implementation manner, the second signal carries at least one of the following:
wake-up cell indication information used to indicate whether to wake up a specific cell;
cell identity related information used to indicate cell information related to transmitting/receiving of wake-up or trigger signals/channels;
second object transmitting/receiving indication information used to indicate a second object transmitted/received by a specific cell;
function trigger indication information used to instruct a specific cell to turn on or off a specific function, such as measurement, synchronization, positioning, energy saving, access, and specific service transmission;
terminal specific identity used to indicate a specific type of the terminal or terminal identity, such as terminal type identity, terminal version identity, terminal identity for supporting specific services, and related indication on whether the target cell can be woken up;
terminal demand information related identity used to indicate a current service requirement of the terminal, such as access, measurement, synchronization, positioning, energy saving, and specific service transmission requirements; or, to indicate a current service requirement of the terminal, such as enhanced mobile broadband (eMBB) service, extended reality (XR) service, Ultra-Reliable and Low Latency Communications (URLLC) service, massive machine type of communication (mMTC) service, ambient Internet of Things (AIoT) service, etc.; or
cell state indication information used to instruct a specific cell to switch between at least two states, or to switch to a second state.

When the terminal transmits the first signal, the terminal may also transmit a second signal to further provide additional information to the base station. The additional information includes at least one of the following: enhanced or supplementary information of the first signal, i.e., information that improves reception performance of the first signal or provides supplementary information of the first signal.

For the second signal including information used to improve the reception performance of the first signal, for example, the second signal is a repetition signal of the first signal, or the second signal carries information related to the first signal, but the first signal and the second signal are two different signals. Transmitting the second signal by the terminal can enhance the base station's ability to detect the terminal and obtain the information carried by the first signal and/or the second signal.

For the second signal used to provide supplementary information of the first signal, for example, the first signal is based on a broadcast transmission when the terminal and the base station are not synchronized or not finely synchronized, and is used as a signal for the base station to discover the terminal. The second signal can be transmitted as supplementary information of the terminal, such as the version or type of the terminal, to allow target cells capable of serving the terminal to be discovered. After the base station detects the first signal, the base station detects the second signal; if a cell can provide services for the terminal, the base station performs at least one of the following: waking up the cell as a target cell; triggering the cell to transmit or receive the second object; or triggering the cell to switch to the second state. In this way, by transmitting the second signal, the accuracy of waking up or triggering the target cell can be improved, thereby enhancing the energy-saving performance of the network.

After receiving the first response signal, the terminal transmits a second signal to further indicate at least one of waking up the target cell, triggering the target cell to transmit or receive the second object; or triggering the target cell to switch to the second state. Here, after receiving the first response signal, such as signals PSS, SSS, TRS, SSB for synchronization, the terminal can synchronize with the base station. The terminal can transmit the second signal carrying indication information for the target cell, which is used for at least one of waking up the target cell, triggering the target cell to transmit or receive the second object, or triggering the target cell to switch to the second state. Here, the target cell can be specifically indicated by the second signal, or implicitly indicated by the second signal having a specific association relationship with the response signal transmitted by the target cell. Here, the target cell can transmit a synchronization signal according to the terminal's service requirements, thereby obtaining more precise indication information, such as at least one of indication information related to being woken up by the terminal, indication information for being triggered to transmit or receive the second object, or indication information for being triggered to switch to a specific cell state, without needing to continuously provide synchronization signals for the terminal, thereby achieving energy savings on the network side.

In some embodiments, the second signal may also be used for joint indication of at least one of the following purposes: waking up the specific cell; triggering the specific cell to transmit and/or receive the first object; or triggering the specific cell to switch to the first state, etc. That is, when the base station detects the second signal of the terminal, it can be used for at least one of the following purposes: waking up the specific cell; triggering the specific cell to transmit and/or receive the second object; or triggering the specific cell to switch to the second state, etc. The specific joint indication may be determined by at least one of the following: protocol stipulation, terminal pre-stored information, core network information, or terminal historical information.

In some embodiments, when the terminal can achieve coarse synchronization with the base station, the second signal can further carry indication information of at least one of waking up the specific cell; triggering the specific cell to transmit and/or receive the second object; or triggering the specific cell to switch to the second state. For example, different time-domain or frequency-domain sequence patterns of the second signal correspond to different indication information. When the base station detects that the second signal adopts a specific time-domain or frequency domain sequence pattern, it obtains the corresponding indication information, and then transmits and/or receives at least one of a specific reference signal or a specific channel. In this way, the base station does not need to continuously transmit a synchronization signal for fine synchronization to the terminal, such as SSB with a period less than or equal to 160ms, that is, the base station can achieve energy savings on the network side while still being able to wake up according to the terminal's service requirements, or be triggered to transmit and/or receive the second object, or switch to transmitting/receiving signals/channels in different energy-saving states, so as not to affect the service requirements of the terminal.

When the second signal implicitly or explicitly triggers the specific cell to transmit and/or receive the second object, at least one of the specific reference signal or the specific channel can be triggered in a targeted manner. For example, according to the service requirements, the terminal needs to trigger the target cell to transmit SSB and/or tracking reference signal (TRS) for synchronization service, and the terminal needs to trigger the target cell to transmit positioning reference signal (PRS) and/or receive sounding reference signal (SRS) for positioning service, and the terminal needs to trigger the target cell to transmit SSB and/or CSI reference signal (CSI-RS) for measurement, the terminal needs to perform at least one of transmitting SSB, transmitting random access preamble or receiving physical random access channel (PRACH) for access. The base station only needs to transmit and/or receive the above reference signal and/or channel according to the second signal, and does not need to transmit and/or receive all reference signals and channels, thereby achieving energy saving on the network side.

When the second signal implicitly or explicitly triggers the target cell to switch to a second state, here, the second state can be one of at least one cell state, or different parameter configuration sets correspond to different cell states. Here, the cell state can be a cell energy-saving state, or a state in which the cell provides different services. For example, the terminal can select a cell based on its service requirement, such as the terminal may only need to perform radio resource management (RRM) measurements for cell selection; in this case, the target cell only needs to be in a light sleep state, transmit SSBs or CSI-RS with an 80ms period. The base station only needs to be triggered to transmit/receive reference signals/channels in a light sleep state according to the second signal, thereby achieving energy saving of the base station while meeting the service requirement of the terminal.

In some embodiments, the method of the present disclosure further includes:
transmitting a second response signal, where the second response signal is a response signal for a target signal, and the target signal includes the second signal or includes the first signal and the second signal.

In one embodiment of the present disclosure, the base station may transmit a first response signal after receiving a first signal and transmit a second response signal after receiving a second signal, or may transmit a second response signal after receiving the first signal and the second signal.

In some embodiments, the second response signal carries at least one of the following:
acknowledgment information of the target signal; where the acknowledgment information may be an OOK/ASK/FSK/PSK signal, such as an OFDM-based OOK/ASK/FSK/PSK signal;
feedback information of the target signal; where the feedback information may be an OOK/ASK/FSK/PSK signal, such as an OFDM-based OOK/ASK/FSK/PSK signal;
a second reference signal and/or second channel; where the second reference signal is a reference signal used for the terminal to determine whether to wake up a dormant cell subsequently, or a reference signal for providing a specific function for the terminal; for example, the specific function may be synchronization, measurement or positioning functions; the reference signal may be SSB, CSI-RS, TRS, random access preamble, etc.; the second channel includes a downlink control channel and/or an uplink control channel; or
cell information of a cell that transmits the second response signal, such as cell identify information.

In some embodiments, the second response signal may be transmitted by the target cell that receives the second signal.

For the second response signal being feedback information or acknowledgment information of the second signal, in order to avoid the base station being awakened by each terminal of the second signal, or being triggered to transmit/receive signals, or being triggered to switch to the second state of the cell, affecting the energy saving gain of the base station, after the base station detects the second signal, the base station can determine, based on internal implementation algorithm, whether to be woken up; or, it may be explicitly indicated by the second signal whether to be woken up, triggered to transmit/receive signals, or triggered to switch to the second cell state. The base station can then confirm or provide feedback, further indicated the terminal whether the cell is woken up, whether being triggered to transmit/receive signal, whether being triggered to switch to the second state of the cell, or whether the second signal has been received. On the one hand, it reduces unconditional wake-up of the base station; on the other hand, it responds to the second signal transmitted by the terminal, thereby enabling both sides to reach mutual understanding.

For the second response signal being the second reference signal and/or the second channel, for example, after the base station detects the second signal, it transmits the second reference signal, such as PSS, SSS, TRS, SSB, etc., receives channel PRACH, PDCCH where paging is located, etc., which can be used for the terminal to perform subsequently at least one of synchronization, RRM measurement, cell access, random access, or paging. The terminal receives and/or transmits the second reference signal and/or the second channel at a specific time interval after receiving the second signal. After receiving the response signal, the target cell provides service to the terminal. The cell that does not transmit the second response signal cannot be accessed by the terminal within a specific time period, and the cell that does not transmit the second response signal enters a dormant state without being in a service state all the time, thereby reducing energy consumption on the network side.

In some embodiments, the method of the present disclosure further includes:
at a fourth moment, transmitting and/or receiving a first specific reference signal and/or a first specific channel in an RRC idle state or an RRC inactive state;
where the fourth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal;
   where the first specific cell includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In some embodiments, the above first specific reference signal includes at least one of the following: primary synchronization signal (PSS), secondary synchronization signal (SSS), synchronization signal/physical broadcast channel signal block (SSB), CSI reference signal for tracking (TRS), positioning reference signal (PRS), phase-tracking reference signal (PT-RS), random access preamble, sounding reference signal (SRS), demodulation reference signal (DMRS), or CSI reference signal (CSI-RS).

In some embodiments, the first specific channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

In one embodiment of the present disclosure, the target cell is woken up after a preset time following reception of the first signal, transmission of the first response signal, reception of the second signal, transmission of the second signal or transmission of the second response signal, and can provide regular services to the terminal. The services at least include transmitting and/or receiving a first specific reference signal and/or a first specific channel in the RRC idle state or RRC inactive state.

In some embodiments, the above first specific reference signal includes at least one of public land mobile network (PLMN) selection information, location registration related information, synchronization signal/physical broadcast channel signal block (SSB)/system information block (SIB), cell selection/reselection information, tracking reference signal (TRS), broadcast message, paging message, or random access related information, etc.

In some embodiments, the method of the present disclosure further includes:
at a fifth moment, receiving and/or transmitting a second specific reference signal and/or a second specific channel;
where the fifth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal;
   where the second specific reference signal includes at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal.

The second specific channel includes at least one of a first target channel indicated by a first signal, a second target channel indicated by a second signal, a channel agreed upon by a protocol, a channel configured by a higher layer, a channel associated with the first signal, or a channel associated with the second signal.

In some embodiments, the above second specific reference signal includes at least one of the following: primary synchronization signal (PSS), secondary synchronization signal (SSS), synchronization signal/physical broadcast channel signal block (SSB), TRS, positioning reference signal (PRS), phase-tracking reference signal (PT-RS), random access preamble, sounding reference signal (SRS), demodulation reference signal (DMRS), or CSI reference signal (CSI-RS).

In some embodiments, the second specific channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

In one embodiment of the present disclosure, the target cell is woken up after a preset time following reception of the first signal, transmission of the first response signal, reception of the second signal, transmission of the second signal or transmission of the second response signal, and triggers transmission and/or reception of the second specific reference signal and/or the second specific channel. For example, the second specific reference signal includes SSB, CSI-RS, or synchronization signal, etc.

In some embodiments, the method of the present disclosure further includes:
at the sixth moment, switching to a specific cell state;
where the sixth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high-layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

In one embodiment of the present disclosure, the target cell switches to a specific cell state after a preset time following reception of the first signal, transmission of the first response signal, reception of the second signal, transmission of the second signal or transmission of the second response signal, for example, switching from a dormant state to a light sleep state, or from a deep sleep state to a light sleep state.

It is to be noted that the fourth moment, the fifth moment and the sixth moment in the embodiment of the present disclosure may be the same or different.

The process of waking up or triggering a base station to provide service with an OOK/ASK/FSK/PSK signal is described hereinafter in conjunction with Embodiments 2 to 5.

Embodiment 2: the base station is woken up after receiving the first signal.

As shown in FIG. 14, the process includes:
At step 1, the terminal transmits a first signal for surrounding dormant cells/base stations (such as pico base stations) to discover terminals, where the first signal is an OFDM-based OOK/ASK/FSK/PSK signal. The first signal can be transmitted through a dedicated transmitter for the first signal or through an NR transmitter. The first signal can be transmitted N times at a specific time point or time period, where N is greater than or equal to 1. The specific transmission locations can be determined by one or more of the following ways: configured by neighbor cell higher layer signaling, configured by core network signaling, indicated via broadcast signaling, or specified by protocol.

At step 2, the base station performs detection of the first signal and obtains information carried by the first signal, where the information includes signal information and/or carries indication information. In case that the first signal meets a specific condition (i.e., the first condition), the cell is directly awakened, or, in case that the first signal does not meet the specific condition, the cell will not be awakened. Here, the first signal may carry M bits of information, where M is greater than or equal to 1, and the carried information includes at least one of the following:
amplitude/phase/power/energy and other related information of the signal; or
indication information used to wake up the cell.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

Assuming that the first signal is an OFDM-based OOK signal, which carries N bits of indication information through modulation and the like, where N is greater than or equal to 1, and is used to indicate wake-up of the target cell.

Specifically, the specific condition may be that the amplitude/phase/power/energy of the signal, etc., meets a specific threshold or a specific value or a specific value range.

For example, assuming that the specific condition is that a power value is greater than the power value threshold P0, in case that the base station detects that the power value P of the first signal is greater than the power value threshold P0, the base station determines that the current terminal is within a service range of the base station; otherwise, the base station determines that the current terminal is not within the service range of the base station.

Assuming the specific condition is that an amplitude value is greater than the amplitude threshold A0, in case that the base station detects that the amplitude value A of the first signal is greater than the amplitude threshold A0, the base station determines that the current terminal is within the service range of the base station; otherwise, the base station determines that the current terminal is not within the service range of the base station.

Assuming the specific condition is that an energy value is greater than the energy threshold value E0, in case that the base station detects that the energy value E of the first signal is greater than the energy value threshold value E0, the base station determines that the current terminal is within the service range of the base station; otherwise, the base station determines that the current terminal is not within the service range of the base station.

Assuming that the specific condition is that a phase value is within the phase value range {Θmax, Θmin}, in case that the base station detects that the phase value θ of the first signal is within the phase value range, the base station determines that the current terminal is within the service range of the base station; otherwise, the base station determines that the current terminal is not within the service range of the base station. For example, when transmitting the first signal, the terminal may apply different phase modulations for base stations in different directions, with {0, π} for cells in one direction and {π, 2π} for cells in another direction. The base station performs coherent demodulation on the received signal to obtain the phase value range of the first signal.

Assuming that the specific condition is that the indication information carried by the first signal is a specific value, such as N bits are all 1; in case that the base station detects that the indication information carried by the first signal satisfies the specific value, the base station determines that the current terminal is within the service range of the base station; otherwise, the base station determines that the current terminal is not within the service range of the base station.

When the base station determines that the current terminal is within the service range of the base station, the dormant cell is awakened and transmits an SSB signal, or CSI-RS or a reference signal for positioning to provide regular services to the terminal; otherwise, the dormant cell will not be awakened.

At step 3, in case that the cell is awakened, the cell performs at least one of the following:
resuming service status;
entering a light sleep state; or
transmitting SSB/SIB1.

The terminal performs operations such as synchronization, cell search, random access, or scheduling request transmission for the SSB transmitted by the awakened cell.

Embodiment 3: after receiving the first signal, the base station is triggered to transmit/receive the first object.

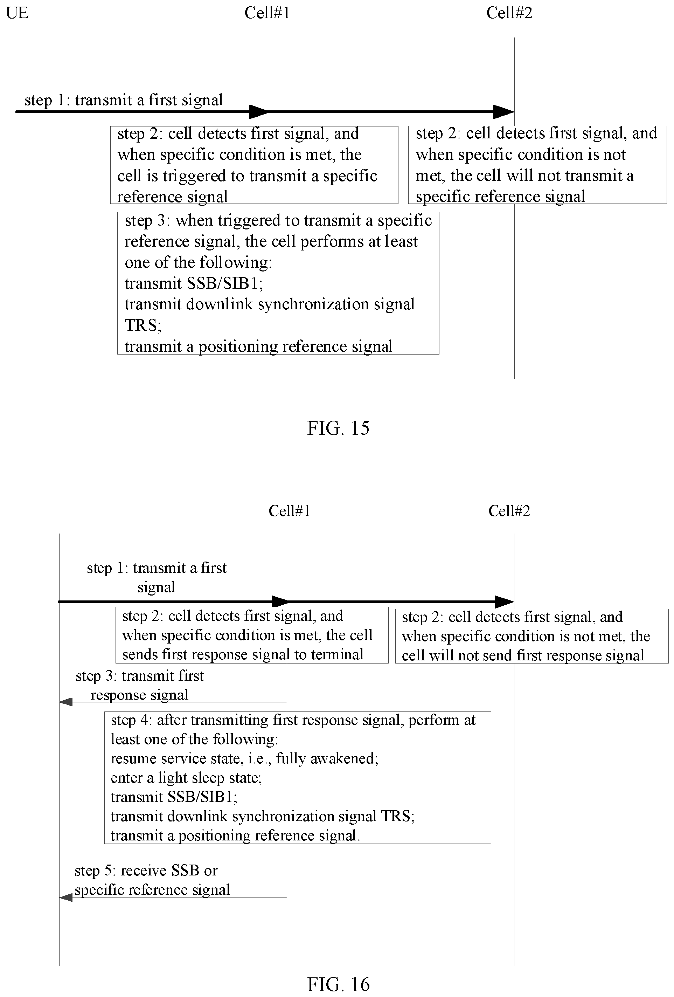

As shown in FIG.15, the process includes:
At step 1, the terminal transmits a first signal for surrounding dormant cells/base stations (such as Pico) to discover terminals, where the first signal is an OFDM-based OOK/ASK/FSK/PSK signal. The first signal can be transmitted through a dedicated transmitter for the first signal or through an NR transmitter. The first signal can be transmitted N times at a specific time point or time period, where N is greater than or equal to 1. The specific transmission locations can be determined by one or more of the following ways: configured by neighbor cell higher layer signaling, configured by core network signaling, indicated via broadcast signaling, or specified by protocol.

At step 2, the base station performs detection of the first signal and obtains information carried by the first signal, where the information includes signal information and/or carries indication information. In case that the first signal meets a specific condition (i.e., the first condition), the cell is triggered to transmit a specific reference signal, or, in case that the first signal does not meet the specific condition, the cell does not transmit a specific reference signal. Here, the first signal may carry M bits of information, where M is greater than or equal to 1, and the carried information includes at least one of the following:
the signal information carried by the first signal may be related information such as the amplitude/phase/power/energy of the signal; or
the indication information carried by the first signal is used to trigger the cell to receive and/or transmit a signal.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

Specifically, the specific condition may be that the amplitude/phase/power/energy of the signal, etc., meets a specific threshold or a specific value or a specific value range.

For example, assuming that the specific condition is that a power value is greater than the power value threshold P0, if the base station detects that the power value P of the first signal is greater than the power value threshold P0, the base station determines that the current terminal needs the base station side to transmit/receive a specific reference signal; otherwise, the base station determines that the current terminal does not need the base station side to transmit/receive a specific reference signal.

Assuming the specific condition is that an amplitude value is greater than the amplitude threshold value A0, in case that the base station detects that the amplitude value A of the first signal is greater than the amplitude threshold value A0, the base station determines that the current terminal needs the base station side to transmit/receive a specific reference signal; otherwise, the base station determines that the current terminal does not need the base station to transmit/receive a specific reference signal.

Assuming the specific condition is that an energy value is greater than the energy threshold value E0, in case that the base station detects that the energy value E of the first signal is greater than the energy value threshold value E0, the base station determines that the current terminal needs the base station side to transmit/receive a specific reference signal; otherwise, the base station determines that the current terminal does not need the base station to transmit/receive a specific reference signal.

Assuming that the specific condition is that a phase value is within the phase value range {Θmax, Θmin}, in case that the base station detects that the phase value θ of the first signal is within the phase value range, the base station determines that the current terminal needs the base station side to transmit/receive a specific reference signal; otherwise, the base station determines that the current terminal does not need the base station to transmit/receive a specific reference signal.

For example, when the base station determines that the current terminal needs the base station side to transmit/receive a specific reference signal, the dormant cell transmits, according to the protocol definition or according to the indication information carried by the first signal, a specific reference signal, such as SSB signal, TRS signal, CSI-RS signal, reference signal PRS/SRS for positioning, etc.; conversely, the dormant cell or the cell in energy-saving state will not transmit/receive the specific reference signal. The configuration of the reference signal is a default parameter configuration defined by the protocol. The specific reference signal may be one or more signals defined by the protocol, for example, the protocol defines that when the base station receives the first signal and a specific condition is met, an SSB signal is transmitted. The SSB signal is transmitted at a default period of 20ms. The same is true for other reference signals.

Assuming that the specific condition is that the indication information carried by the first signal is indication information of a specific reference signal, that is, different values correspond to different reference signals, such as: N bits correspond to M reference signals respectively, and the base station triggers transmission and/or reception of the corresponding specific reference signal according to the indication information.

For example, when the base station receives a first signal and the first signal carries indication information of a specific reference signal, for instance, N1 bits in the N bits are used to indicate a positioning reference signal PRS, the base station transmits a PRS signal according to a default parameter configuration or a parameter configuration specified by the protocol. In some embodiments, when the base station determines that the current terminal needs the base station side to transmit/receive a specific reference signal, the dormant cell can configure a parameter in multiple configurations of the specific reference signal according to the indication information. For example, when the indication information carried in the first signal received by the base station indicates transmission of a positioning reference signal PRS and indicates a certain parameter configuration in pre-configured parameter configurations, the base station transmits the specific reference signal according to the specific parameter configuration.

At step 3, in case that the cell is triggered to transmit a specific reference signal, the cell performs at least one of the following:
transmitting an SSB/SIB1
transmitting a downlink synchronization signal TRS; or
transmitting a positioning reference signal.

The terminal performs operations such as synchronization, cell search, random access, or scheduling request transmission for the SSB transmitted by the awakened cell.

Embodiment 4: after transmitting the first response signal, the base station is fully or partially awakened.

As shown in FIG.16, the process includes:

At step 1, the terminal transmits a first signal for surrounding dormant cells/base stations (such as Pico) to discover terminals, where the first signal is an OFDM-based OOK/ASK/FSK/PSK signal. The first signal can be transmitted through a dedicated transmitter for the first signal or through an NR transmitter.

At step 2, the base station performs detection of the first signal and obtains information carried by the first signal, where the information includes signal information and/or carries indication information. In case that the first signal meets a specific condition (i.e., the first condition), the base station transmit a specific reference signal to the terminal, or, in case that the first signal does not meet the specific condition, the cell does not transmit the specific reference signal. Here, the first signal may carry M bits of information, where M is greater than or equal to 1, and the carried information includes at least one of the following:
related information such as the amplitude/phase/power/energy of the signal; or
indication information used to trigger the cell to receive and/or transmit a signal.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

By taking the first signal being an OOK-1 signal as an example, the first signal can carry 1 bit of information for terminal discovery in a dormant cell. The first signal can be transmitted N times at a specific time point or time period, where N is greater than or equal to 1. The specific transmission locations can be determined by one or more of the following ways: configured by neighbor cell higher layer signaling, configured by core network signaling, indicated via broadcast signaling, or specified by protocol.

At step 3, the base station transmits a first response signal for the first signal. Here, the first response signal may be transmitted when the base station detects that the signal information of the first signal meets a specific condition. Specifically, the specific condition may be that the amplitude/phase/power/energy of the signal meets a specific threshold or a specific value or a specific value range. The first response signal may also be transmitted when the base station detects the first signal.

The specific condition can refer to the embodiment 2 and the embodiment 3.

The first response signal may carry at least one of the following items.

A first item: carrying acknowledgment information of the cell for receiving the first signal; such as N-bit ACK information. Here, the first response signal may be an OFDM-based OOK/ASK/FSK/PSK signal.

For example, in case that the base station detects that the amplitude of the signal is higher than a specific threshold value within a certain period of time, the base station determines that a terminal has entered a service range of this cell. Therefore, the base station determines that it needs to be awakened, and then transmits a first response signal to the terminal, such as an OOK signal carrying 1 bit. After transmitting the first signal, the terminal performs reception detection of the first response signal within a specific time interval.

A second item: carrying cell information of the cell. For example, the cell information may be a predefined sequence or signal pattern. Here, the first response signal may be an OFDM-based OOK/ASK/FSK/PSK signal. The predefined sequence or signal pattern corresponding to the cell information may be information pre-configured for the terminal, or defined by a neighboring cell, core network, or protocol.

For example, in case that the base station detects that the amplitude of the signal is higher than a specific threshold value within a certain period of time, the base station determines that a terminal has entered a service range of the cell. Therefore, the base station determines that it needs to be awakened, and then transmits a first response signal to the terminal. The first response signal includes M bits of information corresponding to the pre-configured or pre-defined cell information of the cell. After transmitting the first signal, the terminal performs reception detection of the first response signal within a specific time interval.

A third item: feedback information of the cell to the indication information carried by the first signal, such as feedback information carried by the first signal.

For example, N-bit information of the first signal carries indication information of M1 specific reference signals and/or M2 specific parameter configurations. Then, when the base station detects the first signal and a specific condition is met, the base station transmits, to the terminal, feedback information corresponding to the indication information, that is, acknowledgment information for indication information of an m1-th specific reference signal and/or acknowledgment information for indication information of an m2-th parameter configuration.

A fourth item: reference signal used for terminal to perform time and frequency synchronization, such as an SSB signal.

For example, in case that the base station detects that the amplitude of the signal is higher than a specific threshold value within a certain period of time, the base station determines that a terminal has entered a service range of this cell. Therefore, the base station determines that it needs to be awakened, and then transmits a response signal to the terminal. The first response signal is a specific reference signal, such as an SSB signal used for terminal to perform time-frequency synchronization.

Step 4: After transmitting the first response signal, the specific cell performs at least one of the following:
resuming service status, that is, fully awakened;
entering a light sleep state;
transmitting SSB/SIB1;
transmitting downlink synchronization signal TRS; or
transmitting positioning reference signal.

At step 5, after receiving the first response signal, the terminal receives the SSB or specific reference signal, performs synchronization, cell search, random access, or transmits a scheduling request.

Embodiment 5: the base station transmits a second signal to wake up or trigger transmitting/receiving of the second object.

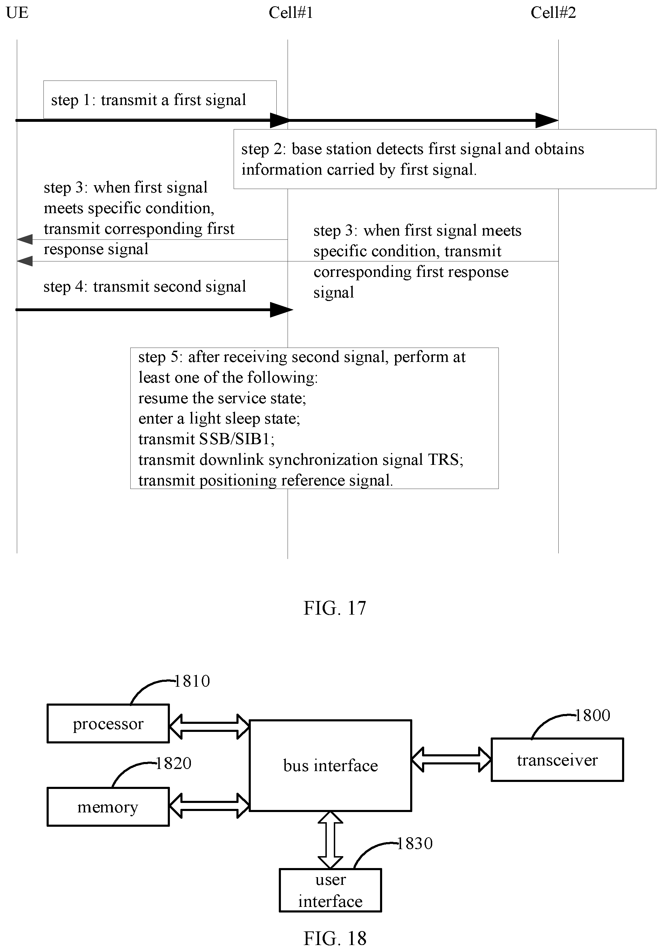

As shown in FIG. 17, the process includes:
at step 1, the terminal transmits a first signal for surrounding dormant cells/base stations (such as Pico) to discover terminals, wherein the first signal is an OFDM-based OOK/ASK/FSK/PSK signal. The first signal can be transmitted through a dedicated transmitter for the first signal or through an NR transmitter.
at step 2, the base station performs detection of the first signal and obtains information carried by the first signal, where the information includes signal information and/or carries indication information. Here, the information carried by the first signal includes at least one of the following:
the signal information carried by the first signal may be related information such as the amplitude/phase/power/energy of the signal; or
the indication information carried by the first signal is used to trigger the cell to receive and/or transmit a signal.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

At step 3, the base station transmits a first response signal for the first signal. Here, the first response signal may be transmitted when the base station detects that the signal information of the first signal meets a specific condition. Specifically, the specific condition may be that the amplitude/phase/power/energy of the signal meets a specific threshold or a specific value or a specific value range. The first response signal may also be transmitted when the base station detects the first signal.

The specific condition can refer to the embodiment 2 and the embodiment 3.

The first response signal may carry at least one of the following items:
a first item: carrying acknowledgment information of the cell for receiving the first signal; such as N-bit ACK information used to indicate that the base station has detected the first signal;
a second item: carrying cell information of the cell; for example, the cell information may be a predefined sequence or signal pattern;
a third item: feedback information of the cell to the indication information carried by the first signal, such as feedback information carried by the first signal; or
a fourth item: a specific reference signal (i.e., the first reference signal) transmitted/received by the cell.

For example,
in case that the first signal is used to wake up the dormant cell, the base station transmits a first response signal to confirm that it has been woken up;
in case that the first signal carries relevant information of the cell, the base station transmits a first response signal to feedback whether it is a target cell for waking up by the terminal;
in case that the first signal carries indication information of transmitting/receiving a triggered first target reference signal, the base station performs feedback according to the indication information;
in case that the base station receives the first signal, the base station transmits, to the terminal, a first response signal, which includes acknowledgment information and/or a specific reference signal, such as at least one of an SSB signal or a SIB signal.

At step 4, after receiving the first response signal, the terminal performs operations such as reception, synchronization, cell search, for a specific reference signal (first reference signal), such as SSB. In case that the current cell meets a cell search or cell reselection condition, the terminal transmits a second signal to an accessed specific cell to wake up or trigger transmitting/receiving of a specific reference signal (i.e., the second target reference signal). Here, the second signal can be an OFDM-based OOK/ASK/FSK/PSK signal or an NR signal.

For example,
in case that the second signal is an OFDM-based OOK/ASK/FSK/PSK signal, its generation method and the carried information may refer to the first signal in the previous embodiment.
in case that the second signal is an NR signal, it can be an uplink control signaling based on PUCCH or an uplink reference signal based on a sequence. The uplink control signaling based on PUCCH is a dedicated signaling for cell wake-up.

The second signal may carry at least one of the following information:
wake-up cell indication information, i.e. whether to wake up a dormant cell;
cell identity related information, i.e., related cell information used to indicate transmitting and/or receiving of a wake-up or trigger signal/channel;
indication information of transmitting and/or receiving a specific reference signal (i.e., the second target reference signal) i.e., used to indicate the cell to transmit/receive the specific reference signal;
function trigger indication information used to instruct a cell to turn on or off a specific function, such as measurement, synchronization, positioning, energy saving, access, and specific service transmission;
terminal specific identity used to indicate a specific type of the terminal or terminal identity, such as terminal type identity, terminal version identity, terminal identity for supporting specific services, and related indication on whether the target cell can be woken up;
terminal demand information related identity used to indicate a current service requirement of the terminal, such as access, measurement, synchronization, positioning, energy saving, and specific service transmission requirements; or, to indicate a current service requirement of the terminal, such as enhanced mobile broadband (eMBB) service, extended reality (XR) service, Ultra-Reliable and Low Latency Communications (URLLC) service, massive machine type of communication (mMTC) service, ambient Internet of Things (AIoT) service, etc.; or
cell state indication information used to instruct the target cell to switch between at least one state, or to switch to the second state.

At step 5, after receiving the second signal for waking up or triggering transmission/reception of a specific reference signal, the specific cell performs at least one of the following:
resuming service status, i.e., being woken up;
entering a light sleep state;
transmitting SSB/SIB1;
transmitting downlink synchronization signal TRS; or
transmitting positioning reference signal.

That is, the specific cell is awakened or partially awakened after receiving the second signal, or transmits/receives a specific reference signal, SSB, measures CSI-RS or synchronization signal, etc.

Here, partial awakening means that the base station only transmits and/or receives part of reference signals, or switches to parameter configuration in the energy-saving state, details of which can refer to the embodiment 3.

In one embodiment of the present disclosures, the above OOK/ASK/FSK/PSK signal is a low-power signal different from the OFDM signal, and the processing method of the low-power signal is different from the processing method of the OFDM signal in the related technology, the cell in the sleep state or energy-saving state can process the low-power signal. In this way, the low-power signal enables the terminal to communicate with a dormant cell or a cell in an energy-saving state without synchronization, thereby waking up the dormant cell or triggering the dormant cell to wake up for providing services.

As shown in FIG. 18, one embodiment of the present disclosure provides an information processing device, which is applied to a terminal and includes a memory 1820, a transceiver 1800, and a processor 1810.

The memory 1820 is used to store a computer program. The transceiver 1800 is used to transmit and receive data under the control of the processor 1810. The processor 1810 is used to read the computer program in the memory 1820 and perform the following operations:
transmitting a first signal used for at least one of the following:
discovering terminal;
waking up a target cell;
triggering a target cell to transmit and/or receive a first object, where the first object includes at least one of a first target reference signal or a first target channel; or
triggering a target cell to switch to a first state, where for example, the first state includes a light sleep state.

The first signal includes at least one of the following: an on-off keying (OOK) signal; an amplitude shift keying (ASK) signal; a frequency shift keying (FSK) signal; or a phase shift keying (PSK) signal.

In FIG. 18, the bus architecture may include any number of interconnected buses and bridges, specifically linking various circuits represented by the processor 1810 and the memory 1820. The bus architecture may also link various other circuits such as peripheral devices, voltage regulators, and power management circuits, which are well-known in the art and therefore will not be further described herein. The bus interface provides an interface. The transceiver 1800 may include multiple elements, including a transmitter and a receiver, providing units for communicating with various other devices over transmission media, where these transmission media include wireless channels, wired channels, optical fibers, etc. For different user equipment, the user interface 1830 may also be an interface capable of connecting external or internal devices, where the connected devices include but are not limited to a keypad, display, speaker, microphone, joystick, etc.

The processor 1810 is responsible for managing the bus architecture and general processing, and the memory 1820 may store data used by the processor 1810 when performing operations.

In some embodiments, the processor 1810 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

The processor executes the method provided by any embodiment of the present disclosure by calling computer programs stored in the memory according to obtained executable instructions. The processor and the memory may also be physically separated.

In some embodiments, the first signal is an orthogonal frequency division multiplexing (OFDM) based signal.

In some embodiments, the first signal carries at least one of the following:
information related to discovering terminal;
information related to waking up the target cell;
information related to triggering a target cell;
information related to triggering a target cell to transmit and/or receive the first object; or
information related to triggering the target cell to switch to the first state.

In some embodiments, the processor further performs the following operations:
obtaining a first response signal for the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the processor further performs the following operations:
transmitting a second signal to a specific cell, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

In some embodiments, the processor further performs the following operations:
obtaining a second response signal; where the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the processor further performs the following operations:
at a first moment, receiving and/or transmitting, in a first specific cell, a first specific reference signal and/or a first specific channel in an RRC idle state or an RRC inactive state;
where the first moment includes at least one of the following:
a moment that is offset by a first duration from a transmission time of the first signal;
a moment that is offset by a second duration from a transmission time of the second signal;
a moment that is offset by a third duration from a reception time of a first response signal to the first signal; or,
a moment that is offset by a fourth duration from a reception time of a second response signal; where the second response signal is a response signal to the second signal, or a response signal to both the first signal and the second signal;
where the first specific cell includes at least one of the following:
at least one of a target cell indicated by the first signal or a specific cell indicated by the second signal;
a cell that transmits the first response signal;
a cell that transmits the second response signal;
a cell indicated by the first response signal; or,
a cell indicated by the second response signal.

The first specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In some embodiments, the processor further performs the following operations:
at a second moment, transmitting and/or receiving a second specific reference signal and/or a second specific channel of a second specific cell;
where the second moment includes at least one of the following:
   a moment that is offset by a first duration from a transmission time of the first signal;
   a moment that is offset by a second duration from a transmission time of the second signal;
   a moment that is offset by a third duration from a reception time of a first response signal to the first signal; or,
   a moment that is offset by a fourth duration from a reception time of a second response signal; where the second response signal is a response signal to the second signal, or a response signal to both the first signal and the second signal;
   where the second specific cell includes at least one of the following:
   at least one of a target cell indicated by the first signal or a specific cell indicated by the second signal;
   a cell that transmits the first response signal;
   a cell that transmits the second response signal;
   a cell indicated by the first response signal; or,
   a cell indicated by the second response signal.

The second specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal associated with the first signal, or a reference signal associated with the second signal. For example, the second specific reference signal includes an SSB, a CSI-RS or a synchronization signal, etc.

The second specific channel includes at least one of a first target channel indicated by a first signal, a second target channel indicated by a second signal, a first channel indicated by a first response signal, a second channel indicated by a second response signal, a channel agreed upon by a protocol, a channel configured by a high layer, a channel associated with the first signal, or a channel associated with the second signal.

In some embodiments, the processor further performs the following operations:
at a third moment, transmitting and/or receiving a third specific reference signal and/or a third specific channel in a specific cell state;
where the third moment includes at least one of the following:
   a moment that is offset by a first duration from a transmission time of the first signal;
   a moment that is offset by a second duration from a transmission time of the second signal;
   a moment that is offset by a third duration from a reception time of a first response signal to the first signal; or,
   a moment that is offset by a fourth duration from a reception time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

It is to be noted that the above device provided in this embodiment of the present disclosure can implement all the method steps of the above information processing method embodiment applied to the terminal, and can achieve the same technical effect. The parts and beneficial effects of this embodiment that are the same as the method embodiment will not be described in detail here.

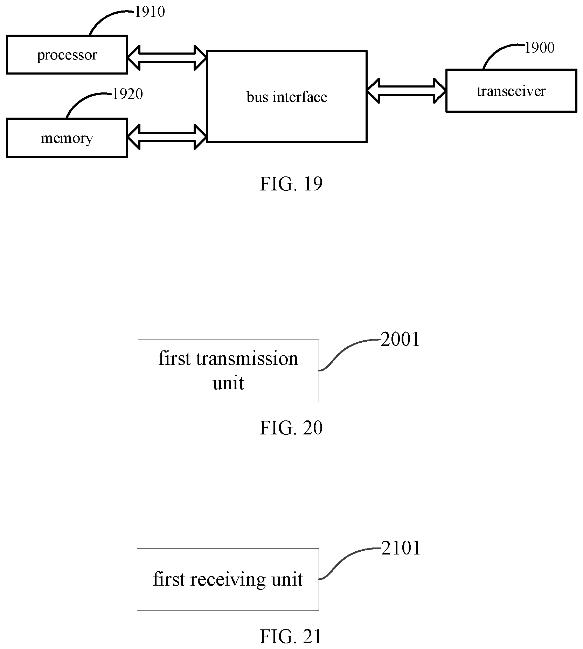

As shown in FIG. 19, one embodiment of the present disclosure further provides an information processing device, which is applied to a network device. The device includes a memory 1920, a transceiver 1900, and a processor 1910.

The memory 1920 is used to store a computer program. The transceiver 1900 is used to transmit and receive data under the control of the processor. The processor 1910 is used to read the computer program in the memory and perform the following operations:
receiving a first signal for at least one of the following:
discovering terminal; waking up a target cell; triggering a target cell to transmit and/or receive a first object; or triggering a target cell to switch to a first state; where the first object includes at least one of a first target reference signal or a first target channel.

The first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering terminal;
information related to waking up the target cell;
information related to triggering a target cell;
information related to triggering a target cell to transmit and/or receive the first object; or
information related to triggering the target cell to switch to the first state.

In some embodiments, the processor further performs the following operations:
transmitting a first response signal for the first signal.

In some embodiments, the processor further performs the following operations:
transmitting the first response signal for the first signal when signal information of the first signal meets a first condition;
where the signal information includes at least one of amplitude, frequency, carrier, bandwidth, phase, power or energy of the first signal.

In some embodiments, the processor further performs the following operations:
in case that the signal information of the first signal meets a first condition, performing at least one of the following:
discovering a terminal; waking up a target cell; triggering the target cell to transmit or receive a first object; or triggering the target cell to switch to a first state.

The signal information includes at least one of amplitude, frequency, carrier, bandwidth, phase, power or energy of the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the processor further performs the following operations:
obtaining a second signal, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

In some embodiments, the processor further performs the following operations:
transmitting a second response signal, where the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the processor further performs the following operations:
at a fourth moment, transmitting and/or receiving a first specific reference signal and/or a first specific channel in an RRC idle state or an RRC inactive state;
where the fourth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal;
   where the first specific cell includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In some embodiments, the processor further performs the following operations:
at a fifth moment, receiving and/or transmitting a second specific reference signal and/or a second specific channel;
where the fifth moment includes at least one of the following:
a moment that is offset by a fifth duration from a reception time of the first signal;
a moment that is offset by a sixth duration from a reception time of the second signal;
a moment that is offset by a seventh duration from a transmission time of a first response signal to the first signal; or,
a moment that is offset by an eighth duration from a transmission time of a second response signal; where the second response signal is a response signal to the second signal, or a response signal to both the first signal and the second signal;
where the second specific reference signal includes at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal.

The second specific channel includes at least one of a first target channel indicated by a first signal, a second target channel indicated by a second signal, a channel agreed upon by a protocol, a channel configured by a higher layer, a channel associated with the first signal, or a channel associated with the second signal.

In some embodiments, the processor further performs the following operations:
at the sixth moment, switching to a specific cell state;
where the sixth moment includes at least one of the following:
a moment that is offset by a fifth duration from a reception time of the first signal;
a moment that is offset by a sixth duration from a reception time of the second signal;
a moment that is offset by a seventh duration from a transmission time of a first response signal to the first signal; or,
a moment that is offset by an eighth duration from a transmission time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high-layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

In FIG. 19, a bus architecture may include any number of interconnected bus and bridge. Specifically, various circuits of one or more processors, which are represented by the processor 1910, and one or more memories, which are represented by the memory 1920, are linked together. The bus architecture may link various other circuits, such as a peripheral device, voltage regulator and a power management circuit together. These features are well known in this field; therefore, this disclosure does not make further description on these features. The bus interface provides an interface. The transceiver 1900 may be multiple elements, including a transmitter and a receiver and provide units, which communicate with other devices on the transmission medium. The transmission medium includes radio channels, wired channels, optical cables, etc. The processor 1910 is responsible for managing the bus architecture and the normal processing. The memory 1920 may be used to store data used by the processor 1910 for performing operations.

The processor 1910 may be a central processing unit (CPU), an application specific integrated circuit (ASIC), a field-programmable gate array (FPGA) or a complex programmable logic device (CPLD). The processor may also adopt multi-core architecture.

It is to be noted that the above device provided in this embodiment of the present disclosure can implement all the method steps of the above information processing method embodiment applied to the network device, and can achieve the same technical effect. The parts and beneficial effects of this embodiment that are the same as the method embodiment will not be described in detail here.

As shown in FIG. 20, one embodiment of the present disclosure further provides an information processing device, including:
a first transmission unit 2001 used to transmit a first signal used for at least one of the following:
discovering terminal;
waking up a target cell;
triggering a target cell to transmit and/or receive a first object, where the first object includes at least one of a first target reference signal and a first target channel; or
triggering a target cell to switch to a first state, where for example, the first state includes a light sleep state.

The first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering terminal;
information related to waking up the target cell;
information related to triggering a target cell;
information related to triggering a target cell to transmit and/or receive the first object; or
information related to triggering the target cell to switch to the first state.

In some embodiments, the device of the embodiment of the present disclosure further includes:
a first obtaining unit used to obtain a first response signal for the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the device of the embodiment of the present disclosure further includes:
a second transmission unit used to transmit a second signal to a specific cell, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

In some embodiments, the device of the embodiment of the present disclosure further includes:
a second obtaining unit used to obtain a second response signal; where the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the device of the embodiment of the present disclosure further includes:
a first transceiver unit used to, at a first moment, receive and/or transmit, in a first specific cell, a first specific reference signal and/or a first specific channel in an RRC idle state or an RRC inactive state;
where the first moment includes at least one of the following:
a moment that is offset by a first duration from a transmission time of the first signal;
a moment that is offset by a second duration from a transmission time of the second signal;
a moment that is offset by a third duration from a reception time of a first response signal to the first signal; or,
a moment that is offset by a fourth duration from a reception time of a second response signal; where the second response signal is a response signal to the second signal, or a response signal to both the first signal and the second signal;
where the first specific cell includes at least one of the following:
   at least one of a target cell indicated by the first signal or a specific cell indicated by the second signal;
   a cell that transmits the first response signal;
   a cell that transmits the second response signal;
   a cell indicated by the first response signal; or,
   a cell indicated by the second response signal.

The first specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In some embodiments, the device of the embodiment of the present disclosure further includes:
a second transceiver unit used to, at a second moment, transmit and/or receive a second specific reference signal and/or a second specific channel of a second specific cell;
where the second moment includes at least one of the following:
a moment that is offset by a first duration from a transmission time of the first signal;
a moment that is offset by a second duration from a transmission time of the second signal;
a moment that is offset by a third duration from a reception time of a first response signal to the first signal; or,
a moment that is offset by a fourth duration from a reception time of a second response signal; where the second response signal is a response signal to the second signal, or a response signal to both the first signal and the second signal;
where the second specific cell includes at least one of the following:
   at least one of a target cell indicated by the first signal or a specific cell indicated by the second signal;
   a cell that transmits the first response signal;
   a cell that transmits the second response signal;
   a cell indicated by the first response signal; or,
   a cell indicated by the second response signal.

The second specific reference signal includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal associated with the first signal, or a reference signal associated with the second signal. For example, the second specific reference signal includes an SSB, a CSI-RS or a synchronization signal, etc.

The second specific channel includes at least one of a first target channel indicated by a first signal, a second target channel indicated by a second signal, a first channel indicated by a first response signal, a second channel indicated by a second response signal, a channel agreed upon by a protocol, a channel configured by a high layer, a channel associated with the first signal, or a channel associated with the second signal.

In some embodiments, the device of the embodiment of the present disclosure further includes:
a third transceiver unit used to, at a third moment, transmit and/or receive a third specific reference signal and/or a third specific channel in a specific cell state;
where the third moment includes at least one of the following:
a moment that is offset by a first duration from a transmission time of the first signal;
a moment that is offset by a second duration from a transmission time of the second signal;
a moment that is offset by a third duration from a reception time of a first response signal to the first signal; or,
a moment that is offset by a fourth duration from a reception time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

It is to be noted that the above device provided in this embodiment of the present disclosure can implement all the method steps of the above information processing method embodiment applied to the terminal, and can achieve the same technical effect. The parts and beneficial effects of this embodiment that are the same as the method embodiment will not be described in detail here.

As shown in FIG. 21, one embodiment of the present disclosure further provides an information processing device, including:
a first receiving unit 2101 used to receive a first signal for at least one of the following:
discovering terminal; waking up a target cell; triggering a target cell to transmit and/or receive a first object; or triggering a target cell to switch to a first state; where the first object includes at least one of a first target reference signal or a first target channel.

The first signal includes at least one of the following: an on-off keying (OOK) signal; an amplitude shift keying (ASK) signal; a frequency shift keying (FSK) signal; or a phase shift keying (PSK) signal.

In some embodiments, the first signal is an orthogonal frequency division multiplexing (OFDM) based signal.

In some embodiments, the first signal carries at least one of the following:
information related to discovering terminal;
information related to waking up the target cell;
information related to triggering a target cell;
information related to triggering a target cell to transmit and/or receive the first object; or
information related to triggering the target cell to switch to the first state.

In some embodiments, the device of the embodiment of the present disclosure further includes:
a third transmission unit used to transmit a first response signal for the first signal after the first receiving unit receives the first signal.

In some embodiments, the third transmission unit is used to transmit the first response signal for the first signal when signal information of the first signal meets a first condition;
where the signal information includes at least one of amplitude, frequency, carrier, bandwidth, phase, power or energy of the first signal.

In some embodiments, the device of the embodiment of the present disclosure further includes:
an execution unit used to, in case that the signal information of the first signal meets a first condition, perform at least one of the following:
discovering a terminal; waking up a target cell; triggering the target cell to transmit or receive a first object; or triggering the target cell to switch to a first state.

The signal information includes at least one of amplitude, frequency, carrier, bandwidth, phase, power or energy of the first signal.

In some embodiments, the first response signal carries at least one of the following:
acknowledgment information of the first signal;
feedback information of the first signal;
a first reference signal and/or first channel; or
cell information of a cell that transmits the first response signal.

In some embodiments, the device of the embodiment of the present disclosure further includes:
a third obtaining unit used to obtain a second signal, where the second signal is used to indicate at least one of the following: waking up the specific cell; triggering the specific cell to transmit or receive a second object; or triggering the specific cell to switch to a second state; where the second object includes at least one of a second target reference signal or a second target channel.

In some embodiments, the second signal carries at least one of the following:
information related to waking up a specific cell;
information related to triggering a specific cell,
information related to triggering a specific cell to transmit and/or receive the second object; or
information related to triggering a specific cell to switch to a second state.

In some embodiments, the device of the embodiment of the present disclosure further includes:
a fourth transmission unit used to transmit a second response signal, where the second response signal is a response signal for a target signal, and the target signal includes the second signal or includes the first signal and the second signal.

In some embodiments, the second response signal carries at least one of the following:
acknowledgment information of the target signal;
feedback information of the target signal;
a second reference signal and/or second channel; or
cell information of a cell that transmits the second response signal.

In some embodiments, the device of the embodiment of the present disclosure further includes:
a fourth transceiver unit used to, at a fourth moment, transmit and/or receive a first specific reference signal and/or a first specific channel in an RRC idle state or an RRC inactive state;
where the fourth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal;
   where the first specific cell includes at least one of a first target reference signal indicated by a first signal, a second target reference signal indicated by a second signal, a first reference signal indicated by a first response signal, a second reference signal indicated by a second response signal, a reference signal agreed upon by a protocol, a reference signal configured by a higher layer, a reference signal pre-stored by a terminal, or a reference signal notified by neighboring cell signaling.

The first specific channel includes at least one of a first target channel indicated by a first signal, a second target channel indicated by a second signal, a first channel indicated by a first response signal, a second channel indicated by a second response signal, a channel agreed upon by a protocol, a channel configured by a higher layer, a channel pre-stored by a terminal, or a channel notified by neighboring cell signaling.

The second signal is used to indicate at least one of the following: waking up a specific cell, triggering a specific cell to transmit or receive a second object, or triggering a specific cell to switch to a second state, where the second object includes at least one of a second target reference signal or a second target channel.

In some embodiments, the device of the embodiment of the present disclosure further includes:
a fifth transceiver unit used to, at a fifth moment, receive and/or transmit a second specific reference signal and/or a second specific channel;
where the fifth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal;
   where the second specific reference signal includes at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal.

The second specific channel includes at least one of a first target channel indicated by a first signal, a second target channel indicated by a second signal, a channel agreed upon by a protocol, a channel configured by a higher layer, a channel associated with the first signal, or a channel associated with the second signal.

In some embodiments, the device of the embodiment of the present disclosure further includes:
a sixth transceiver unit used to, at the sixth moment, switch to a specific cell state;
where the sixth moment includes at least one of the following:
   a moment that is offset by a fifth duration from a reception time of the first signal;
   a moment that is offset by a sixth duration from a reception time of the second signal;
   a moment that is offset by a seventh duration from a transmission time of a first response signal to the first signal; or,
   a moment that is offset by an eighth duration from a transmission time of a second response signal; where the second response signal is a response signal to the second signal, or a response signal to both the first signal and the second signal.

The specific cell state includes at least one of a first state indicated by a first signal, a second state indicated by a second signal, a cell state agreed upon by a protocol, a cell state configured by a high layer, a cell state indicated by the first response signal, a cell state indicated by the second response signal, a cell state associated with the first response signal, or a cell state associated with the second response signal.

The third specific reference signal includes at least one of a reference signal configured by high-layer signaling, a reference signal configured by core network signaling, a reference signal pre-stored by the terminal, or a reference signal notified by neighboring cell signaling.

The third specific channel includes at least one of a channel configured by high-layer signaling, a channel configured by core network signaling, a channel pre-stored by the terminal, or a channel notified by neighboring cell signaling.

It is to be noted that the above device provided in this embodiment of the present disclosure can implement all the method steps of the above information processing method embodiment applied to the network device, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

In some embodiments of the present disclosure, a processor-readable storage medium is further provided. The processor-readable storage medium stores program instructions, and the program instructions are used to enable a processor to execute all the steps of the method embodiment executed by the above terminal or all the steps of the method embodiment executed by the network device, and can achieve the same technical effect. The parts and beneficial effects of this embodiment that are the same as the method embodiment will not be described in detail here.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device (network side device) involved in the embodiment of the present disclosure may be a base station. The base station may include one or more cells providing services for the terminal. Depending on different application scenarios, the base station is called as an access point, a device in an access network in communication with the wireless terminal device through one or more sectors on an air interface, and may also be called other names. The network device may be used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network architectures, the network device may include a Centralized Unit (CU) node and a Distributed Unit (DU) node, and the centralized unit and distributed unit may also be geographically separated.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A signal processing method, performed by a terminal, comprising:
transmitting a first signal used for at least one of the following:
discovering a terminal;
waking up a target cell;
triggering a target cell to transmit and/or receive a first object, wherein the first object comprises at least one of a first target reference signal or a first target channel; or,
triggering a target cell to switch to a first state;
wherein the first signal comprises at least one of the following: an on-off keying (OOK) signal; an amplitude shift keying (ASK) signal; a frequency shift keying (FSK) signal; or a phase shift keying (PSK) signal.

2. The method according to claim 1, wherein the first signal is an orthogonal frequency division multiplexing (OFDM) based signal.

3. The method according to claim 1, wherein the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

4. The method according to claim 1, further comprising:
obtaining a first response signal for the first signal.

5. The method according to claim 4, wherein the first response signal carries at least one of the following:
acknowledgment information of the first signal;
feedback information of the first signal;
a first reference signal and/or first channel; or
cell information of a cell that transmits the first response signal.

6. The method according to claim 1, wherein the method further comprises:
transmitting a second signal to a specific cell; wherein the second signal is used to indicate at least one of the following: waking up the specific cell, triggering the specific cell to transmit or receive a second object, or triggering the specific cell to switch to a second state;
wherein the second object comprises at least one of a second target reference signal or a second target channel.

7. The method according to claim 6, wherein the second signal carries at least one of the following:
information related to waking up the specific cell;
information related to triggering the specific cell,
information related to triggering the specific cell to transmit and/or receive the second object; or
information related to triggering the specific cell to switch to the second state.

8. The method according to claim 6, further comprising:
obtaining a second response signal; wherein the second response signal is a response signal for a target signal, and the target signal comprises the second signal or comprises the first signal and the second signal.

9. The method according to claim 8, wherein the second response signal carries at least one of the following:
acknowledgment information of the target signal;
feedback information of the target signal;
a second reference signal and/or second channel; or
cell information of a cell that transmits the second response signal.

10. The method according to claim 1, 4, 6 or 8, further comprising:
at a first moment, receiving and/or transmitting, in a first specific cell, a first specific reference signal and/or a first specific channel in an RRC idle state or an RRC inactive state;
wherein the first moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
where the first specific cell comprises at least one of the following:
at least one of a target cell indicated by the first signal or a specific cell indicated by the second signal;
a cell that transmits the first response signal;
a cell that transmits the second response signal;
a cell indicated by the first response signal; or,
a cell indicated by the second response signal;
the first specific reference signal comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
the first specific channel comprises at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
the second signal is used to indicate at least one of the following: waking up a specific cell, triggering a specific cell to transmit or receive a second object, or triggering a specific cell to switch to a second state, wherein the second object comprises at least one of a second target reference signal or a second target channel.

11. The method according to claim 1, 4, 6 or 8, further comprising:
at a second moment, transmitting and/or receiving a second specific reference signal and/or a second specific channel of a second specific cell;
wherein the second moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
wherein the second specific cell comprises at least one of the following:
at least one of a target cell indicated by the first signal or a specific cell indicated by the second signal;
a cell that transmits the first response signal;
a cell that transmits the second response signal;
a cell indicated by the first response signal; or,
a cell indicated by the second response signal;
the second specific reference signal comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal associated with the first signal, or a reference signal associated with the second signal;
the second specific channel comprises at least one of a first target channel indicated by the first signal, a second target channel indicated by the second signal, a first channel indicated by the first response signal, a second channel indicated by the second response signal, a channel agreed upon by a protocol, a channel configured by a high layer, a channel associated with the first signal, or a channel associated with the second signal.

12. The method according to claim 1, 4, 6 or 8, further comprising:
at a third moment, transmitting and/or receiving a third specific reference signal and/or a third specific channel in a specific cell state;
wherein the third moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
the specific cell state comprises at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal;
the third specific reference signal comprises at least one of a reference signal configured by high layer signaling, a reference signal configured by core network signaling, a reference signal pre-stored by the terminal, or a reference signal notified by neighboring cell signaling;
the third specific channel comprises at least one of a channel configured by high-layer signaling, a channel configured by core network signaling, a channel pre-stored by the terminal, or a channel notified by neighboring cell signaling.

13. An information processing method, performed by a network side device, comprising:
receiving a first signal for at least one of the following:
discovering a terminal;
waking up a target cell;
triggering a target cell to transmit and/or receive a first object; wherein the first object comprises at least one of a first target reference signal or a first target channel; or
triggering a target cell to switch to a first state;
wherein the first signal comprises at least one of the following: an on-off keying (OOK) signal; an amplitude shift keying (ASK) signal; a frequency shift keying (FSK) signal; or a phase shift keying (PSK) signal.

14. The method according to claim 13, wherein the first signal is an orthogonal frequency division multiplexing (OFDM) based signal.

15. The method according to claim 13, wherein the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

16. The method according to claim 13, wherein after receiving the first signal, the method further comprises:
transmitting a first response signal for the first signal.

17. The method according to claim 13 or 14, wherein the transmitting a first response signal for the first signal, comprises:
transmitting the first response signal for the first signal when signal information of the first signal meets a first condition;
wherein the signal information comprises at least one of amplitude, frequency, carrier, bandwidth, phase, power or energy of the first signal.

18. The method according to claim 13, further comprising:
in case that signal information of the first signal meets a first condition, performing at least one of the following:
discovering a terminal; waking up a target cell; triggering the target cell to transmit or receive a first object; or triggering the target cell to switch to a first state;
wherein the signal information comprises at least one of amplitude, frequency, carrier, bandwidth, phase, power or energy of the first signal.

19. The method according to claim 17, wherein the first response signal carries at least one of the following:
acknowledgment information of the first signal;
feedback information of the first signal;
a first reference signal and/or first channel; or
cell information of a cell that transmits the first response signal.

20. The method according to claim 13, further comprising:
obtaining a second signal; wherein the second signal is used to indicate at least one of the following: waking up a specific cell, triggering a specific cell to transmit or receive a second object; or triggering a specific cell to switch to a second state; wherein the second object comprises at least one of a second target reference signal or a second target channel.

21. The method according to claim 20, wherein the second signal carries at least one of the following:
information related to waking up the specific cell;
information related to triggering the specific cell,
information related to triggering the specific cell to transmit and/or receive the second object; or
information related to triggering the specific cell to switch to the second state.

22. The method according to claim 20, further comprising:
transmitting a second response signal; wherein the second response signal is a response signal for a target signal, and the target signal comprises the second signal or comprises the first signal and the second signal.

23. The method according to claim 22, wherein the second response signal carries at least one of the following:
acknowledgment information of the target signal;
feedback information of the target signal;
a second reference signal and/or second channel; or
cell information of a cell that transmits the second response signal.

24. The method according to claim 13, 16, 20 or 22, further comprising:
at a fourth moment, transmitting and/or receiving a first specific reference signal and/or a first specific channel in an RRC idle state or an RRC inactive state;
wherein the fourth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
wherein the first specific cell comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
the first specific channel comprises at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
the second signal is used to indicate at least one of the following: waking up a specific cell, triggering a specific cell to transmit or receive a second object, or triggering a specific cell to switch to a second state; wherein the second object comprises at least one of a second target reference signal or a second target channel.

25. The method according to claim 13, 16, 20 or 22, further comprising:
at a fifth moment, receiving and/or transmitting a second specific reference signal and/or a second specific channel;
wherein the fifth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
wherein the second specific reference signal comprises at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal;
the second specific channel comprises at least one of a first target channel indicated by the first signal, a second target channel indicated by the second signal, a channel agreed upon by a protocol, a channel configured by a higher layer, a channel associated with the first signal, or a channel associated with the second signal.

26. The method according to claim 13, 16, 20 or 22, further comprising:
at the sixth moment, switching to a specific cell state;
wherein the sixth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
the specific cell state comprises at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal.

27. A signal processing device, comprising: a memory, a transceiver, and a processor;
wherein the memory is used to store a computer program; the transceiver is used to transmit and receive data under the control of the processor; the processor is used to read the computer program in the memory and perform the following operations:
transmitting a first signal used for at least one of the following:
discovering a terminal;
waking up a target cell;
triggering a target cell to transmit and/or receive a first object, wherein the first object comprises at least one of a first target reference signal or a first target channel; or,
triggering a target cell to switch to a first state;
wherein the first signal comprises at least one of the following: an on-off keying (OOK) signal; an amplitude shift keying (ASK) signal; a frequency shift keying (FSK) signal; or a phase shift keying (PSK) signal.

28. The device according to claim 27, wherein the first signal is an orthogonal frequency division multiplexing (OFDM) based signal.

29. The device according to claim 27, wherein the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

30. The device according to claim 27, wherein the processor is used to perform the following operations:
obtaining a first response signal for the first signal.

31. The device according to claim 30, wherein the first response signal carries at least one of the following:
acknowledgment information of the first signal;
feedback information of the first signal;
a first reference signal and/or first channel; or
cell information of a cell that transmits the first response signal.

32. The device according to claim 27, wherein the processor is used to perform the following operations:
transmitting a second signal to a specific cell; wherein the second signal is used to indicate at least one of the following: waking up the specific cell, triggering the specific cell to transmit or receive a second object, or triggering the specific cell to switch to a second state; wherein the second object comprises at least one of a second target reference signal or a second target channel.

33. The device according to claim 32, wherein the second signal carries at least one of the following:
information related to waking up the specific cell;
information related to triggering the specific cell,
information related to triggering the specific cell to transmit and/or receive the second object; or
information related to triggering the specific cell to switch to the second state.

34. The device according to claim 32, wherein the processor is used to perform the following operations:
obtaining a second response signal; wherein the second response signal is a response signal for a target signal, and the target signal comprises the second signal or comprises the first signal and the second signal.

35. The device according to claim 34, wherein the second response signal carries at least one of the following:
acknowledgment information of the target signal;
feedback information of the target signal;
a second reference signal and/or second channel; or
cell information of a cell that transmits the second response signal.

36. The device according to claim 27, 30, 32 or 34, wherein the processor is used to perform the following operations:
at a first moment, receiving and/or transmitting, in a first specific cell, a first specific reference signal and/or a first specific channel in an RRC idle state or an RRC inactive state;
wherein the first moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
where the first specific cell comprises at least one of the following:
at least one of a target cell indicated by the first signal or a specific cell indicated by the second signal;
a cell that transmits the first response signal;
a cell that transmits the second response signal;
a cell indicated by the first response signal; or,
a cell indicated by the second response signal;
the first specific reference signal comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
the first specific channel comprises at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
the second signal is used to indicate at least one of the following: waking up a specific cell, triggering a specific cell to transmit or receive a second object, or triggering a specific cell to switch to a second state, wherein the second object comprises at least one of a second target reference signal or a second target channel.

37. The device according to claim 27, 30, 32 or 34, wherein the processor is used to perform the following operations:
at a second moment, transmitting and/or receiving a second specific reference signal and/or a second specific channel of a second specific cell;
wherein the second moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
wherein the second specific cell comprises at least one of the following:
at least one of a target cell indicated by the first signal or a specific cell indicated by the second signal;
a cell that transmits the first response signal;
a cell that transmits the second response signal;
a cell indicated by the first response signal; or,
a cell indicated by the second response signal;
the second specific reference signal comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal associated with the first signal, or a reference signal associated with the second signal;
the second specific channel comprises at least one of a first target channel indicated by the first signal, a second target channel indicated by the second signal, a first channel indicated by the first response signal, a second channel indicated by the second response signal, a channel agreed upon by a protocol, a channel configured by a high layer, a channel associated with the first signal, or a channel associated with the second signal.

38. The device according to claim 27, 30, 32 or 34, wherein the processor is used to perform the following operations:
at a third moment, transmitting and/or receiving a third specific reference signal and/or a third specific channel in a specific cell state;
wherein the third moment comprises at least one of the following:
a moment that is offset by a first duration from a transmission time of the first signal;
a moment that is offset by a second duration from a transmission time of a second signal;
a moment that is offset by a third duration from a reception time of a first response signal to the first signal; or,
a moment that is offset by a fourth duration from a reception time of a second response signal; wherein the second response signal is a response signal to the second signal, or a response signal to both the first signal and the second signal;
the specific cell state comprises at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal;
the third specific reference signal comprises at least one of a reference signal configured by high layer signaling, a reference signal configured by core network signaling, a reference signal pre-stored by the terminal, or a reference signal notified by neighboring cell signaling;
the third specific channel comprises at least one of a channel configured by high-layer signaling, a channel configured by core network signaling, a channel pre-stored by the terminal, or a channel notified by neighboring cell signaling.

39. A signal processing device, comprising: a memory, a transceiver, and a processor;
wherein the memory is used to store a computer program; the transceiver is used to transmit and receive data under the control of the processor; the processor is used to read the computer program in the memory and perform the following operations:
receiving a first signal for at least one of the following:
discovering a terminal;
waking up a target cell;
triggering a target cell to transmit and/or receive a first object; wherein the first object comprises at least one of a first target reference signal or a first target channel; or
triggering a target cell to switch to a first state;
wherein the first signal comprises at least one of the following: an on-off keying (OOK) signal; an amplitude shift keying (ASK) signal; a frequency shift keying (FSK) signal; or a phase shift keying (PSK) signal.

40. The device according to claim 39, wherein the first signal is an orthogonal frequency division multiplexing (OFDM) based signal.

41. The device according to claim 39, wherein the first signal carries at least one of the following:
information related to discovering the terminal;
information related to waking up the target cell;
information related to triggering the target cell;
information related to triggering the target cell to transmit and/or receive the first object; or
information related to triggering the target cell to switch to the first state.

42. The device according to claim 39, wherein the processor is used to perform the following operations:
transmitting a first response signal for the first signal.

43. The device according to claim 39 or 40, wherein the processor is used to perform the following operations:
transmitting the first response signal for the first signal when signal information of the first signal meets a first condition;
wherein the signal information comprises at least one of amplitude, frequency, carrier, bandwidth, phase, power or energy of the first signal.

44. The device according to claim 39, wherein the processor is used to perform the following operations:
in case that signal information of the first signal meets a first condition, performing at least one of the following:
discovering a terminal; waking up a target cell; triggering the target cell to transmit or receive a first object; or triggering the target cell to switch to a first state;
wherein the signal information comprises at least one of amplitude, frequency, carrier, bandwidth, phase, power or energy of the first signal.

45. The device according to claim 43, wherein the first response signal carries at least one of the following:
acknowledgment information of the first signal;
feedback information of the first signal;
a first reference signal and/or first channel; or
cell information of a cell that transmits the first response signal.

46. The device according to claim 39, wherein the processor is used to perform the following operations:
obtaining a second signal; wherein the second signal is used to indicate at least one of the following: waking up a specific cell, triggering a specific cell to transmit or receive a second object; or triggering a specific cell to switch to a second state; wherein the second object comprises at least one of a second target reference signal or a second target channel.

47. The device according to claim 46, wherein the second signal carries at least one of the following:
information related to waking up the specific cell;
information related to triggering the specific cell,
information related to triggering the specific cell to transmit and/or receive the second object; or
information related to triggering the specific cell to switch to the second state.

48. The device according to claim 46, wherein the processor is used to perform the following operations:
transmitting a second response signal; wherein the second response signal is a response signal for a target signal, and the target signal comprises the second signal or comprises the first signal and the second signal.

49. The device according to claim 48 wherein the second response signal carries at least one of the following:
acknowledgment information of the target signal;
feedback information of the target signal;
a second reference signal and/or second channel; or
cell information of a cell that transmits the second response signal.

50. The device according to claim 39, 42, 46 or 48, wherein the processor is used to perform the following operations:
at a fourth moment, transmitting and/or receiving a first specific reference signal and/or a first specific channel in an RRC idle state or an RRC inactive state;
wherein the fourth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
wherein the first specific cell comprises at least one of a first target reference signal indicated by the first signal, a second target reference signal indicated by the second signal, a first reference signal indicated by the first response signal, a second reference signal indicated by the second response signal, a reference signal agreed upon by a protocol, a reference signal configured by a higher layer, a reference signal pre-stored by the terminal, or a reference signal notified by neighboring cell signaling;
the first specific channel comprises at least one of a first target channel indicated by the first signal, a second target channel indicated by the second signal, a first channel indicated by the first response signal, a second channel indicated by the second response signal, a channel agreed upon by a protocol, a channel configured by a higher layer, a channel pre-stored by the terminal, or a channel notified by neighboring cell signaling;
the second signal is used to indicate at least one of the following: waking up a specific cell, triggering a specific cell to transmit or receive a second object, or triggering a specific cell to switch to a second state; wherein the second object comprises at least one of a second target reference signal or a second target channel.

51. The device according to claim 39, 42, 46 or 48, wherein the processor is used to perform the following operations:
at a fifth moment, receiving and/or transmitting a second specific reference signal and/or a second specific channel;
wherein the fifth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
wherein the second specific reference signal comprises at least one of a first target reference signal indicated by the first signal, a second target reference signal indicated by the second signal, a first reference signal indicated by the first response signal, a first reference signal indicated by the second response signal, a reference signal agreed upon by a protocol, a reference signal configured by a higher layer, a reference signal associated with the first signal, or a reference signal associated with the second signal;
the second specific channel comprises at least one of a first target channel indicated by the first signal, a second target channel indicated by the second signal, a channel agreed upon by a protocol, a channel configured by a higher layer, a channel associated with the first signal, or a channel associated with the second signal.

52. The device according to claim 39, 42, 46 or 48, wherein the processor is used to perform the following operations:
at the sixth moment, switching to a specific cell state;
wherein the sixth moment comprises at least one of the following:
a moment that is offset by a fifth duration from a reception time of the first signal;
a moment that is offset by a sixth duration from a reception time of a second signal;
a moment that is offset by a seventh duration from a transmission time of a first response signal to the first signal; or,
a moment that is offset by an eighth duration from a transmission time of a second response signal; wherein the second response signal is a response signal to the second signal, or a response signal to both the first signal and the second signal;
the specific cell state comprises at least one of a first state indicated by the first signal, a second state indicated by the second signal, a cell state agreed upon by a protocol, a cell state configured by a high layer, a cell state indicated by the first response signal, a cell state indicated by the second response signal, a cell state associated with the first response signal, or a cell state associated with the second response signal.

53. A processor-readable storage medium, comprising a computer program stored thereon; wherein the computer program, when executed by a processor, causes the processor to perform steps of the signal processing method according to any one of claims 1 to 12, or to perform steps of the signal processing method according to any one of claims 13 to 26.
